(19) Europäisches Patentamt
European Patent Office
Office européen des brevets

(11) **EP 3 004 257 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(51) Int Cl.:
*C09D 1/00* (2006.01)      *C25D 13/22* (2006.01)
*C09D 5/08* (2006.01)      *C09D 5/44* (2006.01)

(21) Anmeldenummer: **14726638.1**

(22) Anmeldetag: **28.05.2014**

(86) Internationale Anmeldenummer:
**PCT/EP2014/061109**

(87) Internationale Veröffentlichungsnummer:
**WO 2014/191481 (04.12.2014 Gazette 2014/49)**

(54) **VERFAHREN ZUR TAUCHLACK-BESCHICHTUNG ELEKTRISCH LEITFÄHIGER SUBSTRATE UNTER NACHBEHANDLUNG DER TAUCHLACK-BESCHICHTUNG MIT EINER WÄSSRIGEN SOL-GEL- ZUSAMMENSETZUNG VOR DEREN AUSHÄRTUNG**

METHOD FOR DIP COATING ELECTRICALLY CONDUCTIVE SUBSTRATES WITH AFTER-TREATMENT OF THE DIP COATING WITH AN AQUEOUS SOL GEL COMPOSITION PRIOR TO ITS HARDENING

PROCÉDÉ DE REVÊTEMENT EN IMMERSION DE SUBSTRATS CONDUCTEURS D'ÉLECTRICITÉ EN EFFECTUANT UN POST-TRAITEMENT DU REVÊTEMENT EN IMMERSION À L'AIDE D'UNE COMPOSITION SOL-GEL AQUEUSE AVANT SON DURCISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2013 EP 13169510**

(43) Veröffentlichungstag der Anmeldung:
**13.04.2016 Patentblatt 2016/15**

(73) Patentinhaber:
• **BASF Coatings GmbH**
  **48165 Münster (DE)**
• **Henkel AG & Co. KGaA**
  **40589 Düsseldorf (DE)**

(72) Erfinder:
• **WCZASEK, Katrin**
  **30419 Hannover (DE)**
• **SINNWELL, Sebastian**
  **40237 Düsseldorf (DE)**

• **SCHULTE, Rolf**
  **48329 Havixbeck (DE)**
• **HERRMANN, Ute**
  **42111 Wuppertal (DE)**

(74) Vertreter: **BASF IP Association**
  **BASF SE**
  **G-FLP-C006**
  **67056 Ludwigshafen (DE)**

(56) Entgegenhaltungen:
WO-A2-2006/019803      CN-A- 101 787 553
CN-A- 102 212 863      CN-B- 101 538 711
CN-Y- 201 367 491

• WANG D ET AL: "Sol-gel coatings on metals for corrosion protection", PROGRESS IN ORGANIC COATINGS, ELSEVIER BV, NL, Bd. 64, Nr. 4, 1. März 2009 (2009-03-01), Seiten 327-338, XP025960600, ISSN: 0300-9440, DOI: 10.1016/J.PORGCOAT.2008.08.010 [gefunden am 2008-09-23] in der Anmeldung erwähnt

**Beschreibung**

Die vorliegende Erfindung betrifft ein Verfahren zur zumindest teilweisen Beschichtung eines elektrisch leitfähigen Substrats umfassend wenigstens die Schritte (1): zumindest teilweise Beschichtung des Substrats mit einem wenigstens ein Bindemittel umfassenden Tauchlack durch eine zumindest teilweise elektrophoretische Abscheidung des Tauchlacks auf der Substratoberfläche, und (2): Kontaktieren des mit dem Tauchlack zumindest teilweise beschichteten Substrats mit einer wässrigen Zusammensetzung, wobei die in Schritt (2) eingesetzte wässrige Zusammensetzung eine wässrige Sol-Gel-Zusammensetzung ist, der Schritt (2) vor einer Aushärtung des elektrophoretisch abgeschiedenen Tauchlacks erfolgt, ein nach diesem Verfahren erhältliches zumindest teilweise beschichtetes Substrat und die Verwendung einer wässrigen Sol-Gel-Zusammensetzung zur Nachbehandlung einer durch eine zumindest teilweise elektrophoretische Abscheidung zumindest teilweise auf ein elektrisch leitfähiges Substrat aufgebrachten Tauchlackschicht.

Im Automobilbereich müssen die zur Herstellung eingesetzten metallischen Bauteile üblicherweise gegen Korrosion geschützt werden, da die Anforderungen an den zu erzielenden Korrosionsschutz sehr hoch sind, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Aus CN 101 538 711 B sind Substrate bekannt, auf die nach elektrophoretischer Abscheidung von Kobaltferrit eine Schicht basierend auf Bariumtitanat aufgetragen wird. Aus CN 101 787 553 A sind Substrate bekannt, auf die nach elektrophoretischer Abscheidung eines Blei-Magnesium-Niobat-Titanats eine Schicht basierend auf Bleioxid aufgetragen wird. Die jeweils zur elektrophoretischen Abscheidung eingesetzten Zusammensetzungen enthalten keine Bindemittel. Die zur Beschichtung mit Bariumtitanat bzw. Bleioxid eingesetzten Zusammensetzungen sind nicht wässrig. Vor der Beschichtung mit Bariumtitanat wird gemäß CN 101 538 711 B über eine Dauer von 30-60 Minuten auf 600-700°C erhitzt.

Aus WO 2006/019803 A2 ist ein Verfahren zur Beschichtung eines metallischen Substrats bekannt, wobei dieses nach elektrophoretischer Beschichtung mit einer Siloxan-haltigen Zusammensetzung wie einem Polysiloxan beschichtet wird, d.h. einem Polymerisationsprodukt von Siloxanen, in dem die Wasserstoffreste der Siloxane jeweils durch organische Reste ersetzt sind. Hinweise auf Sol-Gel-Zusammensetzungen enthält WO 2006/019803 A2 nicht.

Nachteilig an den bekannten Beschichtungsverfahren, insbesondere an den bekannten in der Automobilindustrie eingesetzten Verfahren, ist, dass diese Verfahren üblicherweise einen Phosphatierungsschritt als Vorbehandlung vorsehen, in dem das zu beschichtende Substrat nach einem optionalen Reinigungsschritt und vor einem Tauchlackierungsschritt mit einem Metallphosphat wie Zinkphosphat in einem Phosphatierungsschritt behandelt wird, um einen ausreichenden Korrosionsschutz zu gewährleisten. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird.

Eine Nachbehandlung von in einem ersten Verfahrensschritt mit einer Beschichtung wie mit einem Tauchlack versehenen Substraten durch Spülen mit einer wässrigen Zusammensetzung, die kolloidale Oxide oder kolloidale Hydroxide eines Metalls der Ordnungszahl 20 bis 83 enthält, ist beispielsweise aus EP 1 510 558 A1 bekannt. Solchen kolloidalen Metalloxide und Metallhydroxide lassen sich jedoch nur schwer auf eine Beschichtung aufbringen, insbesondere da mit solchen Metalloxiden und Metallhydroxiden keine Filmbildung und zudem keine kovalenten Bindungen mit im Tauchlack enthaltenem Bindemittel und gegebenenfalls Vernetzungsmittel ausgebildet werden können.

Eine Nachbehandlung von in einem ersten Verfahrensschritt mit einer Beschichtung versehenen Substraten durch Spülen mit einer Zusammensetzung, die eines oder mehrere der Elemente Yttrium, Titan und Metallen aus der Gruppe der Seltenen Erden enthält, ist aus WO 03/090938 A1 bekannt. Die Korrosionsschutzwirkung der mittels dem darin beschriebenen Verfahren erhaltenen beschichten Substrate ist jedoch auf wenige metallische Substrate wie Stahl limitiert. Zudem ist insbesondere der Einsatz von Seltenen Erden in industriellen Prozessen wie der Lackierung von Automobilkarosserien oder entsprechender Teile aus ökonomischen Gründen nicht vorteilhaft. Ferner lassen sich auch die in WO 03/090938 A1 offenbarten Zusammensetzungen nur schwer auf eine Beschichtung aufbringen, da auch mit diesen keine Filmbildung und zudem keine kovalenten Bindungen mit im Tauchlack enthaltenem Bindemittel und gegebenenfalls Vernetzungsmittel ausgebildet werden können.

Es besteht daher ein Bedarf an einem Verfahren zur zumindest teilweisen Beschichtung eines elektrisch leitfähigen Substrats, welches ökonomischer und ökologischer durchgeführt werden kann als die bekannten Verfahren, aber dennoch zumindest in gleichem Maße dazu geeignet ist, die erforderliche Korrosionsschutzwirkung zu erzielen.

Eine Aufgabe der vorliegenden Erfindung ist es daher, ein Verfahren zur zumindest teilweisen Beschichtung eines elektrisch leitfähigen Substrats zur Verfügung zu stellen, welches gegenüber dem aus dem Stand der Technik bekannten Verfahren Vorteile aufweist. Insbesondere ist es eine Aufgabe der vorliegenden Erfindung, ein solches Verfahren zur Verfügung zu stellen, welches es ermöglicht, auf die üblicherweise noch vor einer Tauchlackierung mittels eines Metallphosphats durchzuführende Phosphatierung zu verzichten, aber mit welchem dennoch die zumindest gleiche Korrosionsschutzwirkung erzielt werden kann, die auch mit den üblichen Verfahren erzielt werden kann.

Diese Aufgabe wird gelöst durch ein Verfahren zur zumindest teilweisen Beschichtung eines elektrisch leitfähigen Substrats umfassend wenigstens die Schritte

> (1) zumindest teilweise Beschichtung des Substrats mit einem wenigstens ein Bindemittel umfassenden Tauchlack durch eine zumindest teilweise elektrophoretische Abscheidung des Tauchlacks auf der Substratoberfläche, und
> (2) Kontaktieren des mit dem Tauchlack zumindest teilweise beschichteten Substrats mit einer wässrigen Zusammensetzung,

wobei die in Schritt (2) eingesetzte wässrige Zusammensetzung eine wässrige Sol-Gel-Zusammensetzung ist, welche erhältlich ist durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser, und der Schritt (2) vor einer Aushärtung des elektrophoretisch abgeschiedenen Tauchlacks erfolgt.

Es wurde überraschend gefunden, dass es das erfindungsgemäße Verfahren ermöglicht, auf den üblicherweise vor der Tauchlackierung durchzuführenden erforderlichen Schritt einer Vorbehandlung des zumindest teilweise zu beschichtenden elektrisch leitfähigen Substrats mit einem Metallphosphat wie Zinkphosphat zur Ausbildung einer Metallphosphatschicht auf dem Substrat verzichten zu können, und das Verfahren damit insgesamt sowohl ökonomischer, insbesondere weniger zeit- und kosten-intensiv, als auch ökologischer als herkömmliche Verfahren gestaltet werden kann. Insbesondere wurde überraschend gefunden, dass mittels des erfindungsgemäßen Verfahrens umfassend wenigstens Schritt (1) und (2) hergestellte zumindest teilweise beschichtete Substrate insbesondere aufgrund der Kontaktierung gemäß Schritt (2) - im Vergleich zu durch herkömmliche Verfahren erhaltene Substrate -, die keinen Schritt (2) vorsehen, bezüglich der Korrosionsschutzwirkung der Beschichtungen aber zumindest keine Nachteile und insbesondere Vorteile aufweisen: so zeichnen sich die mittels des erfindungsgemäßen Verfahrens hergestellten beschichteten Substrate, insbesondere beschichtete verzinkte Stähle und Aluminium, gegenüber entsprechenden Vergleichsbeispielen insbesondere dadurch aus, dass die Unterwanderung als Maß für Korrosionsschutzwirkung im Fall der mittels des erfindungsgemäßen Verfahrens umfassend insbesondere Schritt (2) hergestellten beschichteten Substrate signifikant geringer ausfällt.

Vorzugsweise ist das erfindungsgemäße Verfahren ein Verfahren zur zumindest teilweisen Beschichtung eines im und/oder für den Automobilbau eingesetzten elektrisch leitfähigen Substrats. Das Verfahren kann kontinuierlich wie beispielsweise im Coil-Coating-Verfahren oder diskontinuierlich erfolgen.

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl, und aluminiertem Stahl, Aluminium und Magnesium, insbesondere eignen sich verzinkter Stahl, aluminierter Stahl und Aluminium. Als Substrate eignen sich dabei insbesondere Teile von Karosserien oder vollständige Karosserien von zu produzierenden Automobilen. Bevor das jeweilige elektrisch leitfähige Substrat im erfindungsgemäßen Verfahren eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Eine solche Vorbehandlung mittels einer Phosphatierung, die üblicherweise nach Reinigung des Substrats und vor der Tauchlackierung des Substrats erfolgt, ist insbesondere ein in der Automobilindustrie üblicher Vorbehandlungsschritt. Es ist jedoch gerade eine Aufgabe der vorliegenden Erfindung, dass auf eine solche Vorbehandlung des zumindest teilweise zu beschichtenden elektrisch leitfähigen Substrats mittels Phosphatierung mit einem Metallphosphat wie beispielsweise Zinkphosphat verzichtet werden kann. In einer bevorzugten Ausführungsform erfolgt im erfindungsgemäßen Verfahren daher kein solcher Phosphatierungsschritt, insbesondere nicht vor der Durchführung von Schritt (1) des erfindungsgemäßen Verfahrens. Dementsprechend weist das erfindungsgemäße Verfahren vorzugsweise keinen noch vor Schritt (1) des erfindungsgemäßen Verfahrens durchzuführenden Vorbehandlungsschritt mit wenigstens einem Metallphosphat auf.

**Schritt (0)**

In einer bevorzugten Ausführungsform umfasst das erfindungsgemäße Verfahren einen Schritt (0), der vorzugsweise vor dem Schritt (1) durchgeführt wird, nämlich eine

> (0) Vorbehandlung des elektrisch leitfähigen Substrats mit einer wässrigen Vorbehandlungs-Zusammensetzung (B) umfassend

(B1) wenigstens eine wasserlösliche Verbindung, welche wenigstens ein Ti-Atom und/oder wenigstens ein Zr-Atom enthält, und

(B2) wenigstens eine wasserlösliche Verbindung als Quelle für Fluoridionen, welches wenigstens ein Fluor-Atom enthält,

oder mit einer wässrigen Vorbehandlungs-Zusammensetzung (B), welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung (B) aufgrund der in ihr enthaltenen Komponenten (B1) und (B2), vorzugsweise zudem aufgrund der entsprechend gewählten Mengenanteile dieser Komponenten (B1) und (B2) einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung (B) eine Gesamtkonzentration an den Elementen Ti und/oder Zr auf, die $2,5 \cdot 10^{-4}$ mol/L nicht unterschreitet, aber nicht grösser als $2,0 \cdot 10^{-2}$ mol/L ist. Die Herstellung solcher Vorbehandlungs-Zusammensetzungen (B) und ihr Einsatz in der Vorbehandlung elektrisch leitfähiger Substrat ist beispielsweise aus WO 2009/115504 A1 bekannt.

Vorzugsweise enthält die Vorbehandlungs-Zusammensetzung (B) zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise ein wenigstens Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen (B) und ihr Einsatz in der Vorbehandlung elektrisch leitfähiger Substrat ist beispielsweise aus WO 2009/115504 A1 bekannt. Die Alumosilikate liegen vorzugsweise als Nanopartikel mit einer durch dynamische Lichtstreuung bestimmbaren Teilchengröße im Bereich von 1 bis 100 nm. Die durch dynamische Lichtstreuung bestimmbare Teilchengröße solcher Nanopartikel im Bereich von 1 bis 100 nm wird dabei gemäß DIN ISO 13321 bestimmt.

**Schritt (1)**

Schritt (1) des erfindungsgemäßen Verfahrens, d.h. die zumindest teilweise Beschichtung des Substrats mit einem wenigstens ein Bindemittel umfassenden Tauchlack durch eine zumindest teilweise elektrophoretische Abscheidung des Tauchlacks auf der Substratoberfläche, erfolgt vorzugsweise mittels Anlegen einer elektrischen Spannung zwischen dem Substrat und wenigstens einer Gegenelektrode. Schritt (1) des erfindungsgemäßen Verfahrens wird vorzugsweise in einem Tauchlackbad durchgeführt. Die Gegenelektrode befindet sich dabei vorzugsweise in dem Tauchlackbad. Gegebenenfalls kann die Gegenelektrode auch vom Tauchlackbad separiert vorliegen, beispielsweise über eine für Anionen permeable Anionenaustauschermembran. Dabei können Anionen, die während der Tauchlackierung gebildet werden, aus dem Lack durch die Membran in das Anolyt abtransportiert werden, wodurch der pH-Wert im Tauchlackbad reguliert bzw. konstant gehalten werden kann.

Vorzugsweise erfolgt in Schritt (1) des erfindungsgemäßen Verfahrens eine vollständige Beschichtung des Substrats mit einem wenigstens ein Bindemittel umfassenden Tauchlack durch eine vollständige elektrophoretische Abscheidung des Tauchlacks auf der gesamten Substratoberfläche.

Vorzugsweise wird in Schritt (1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (1) durchgeführt.

In Schritt (1) des erfindungsgemäßen Verfahrens wird eine zumindest teilweise Beschichtung des Substrats durch eine zumindest teilweise elektrophoretische Abscheidung eines Tauchlacks erzielt. Bei dem Tauchlack handelt es sich daher um einen Elektrotauchlack. Als Elektrotauchlack kann sowohl ein kathodisch abscheidbarer Elektrotauchlack als auch ein anodisch abscheidbarer Elektrotauchlack eingesetzt werden. Dem Fachmann sind solche Elektrotauchlacke bekannt. Vorzugsweise ist der Tauchlack ein kathodisch abscheidbarer Elektrotauchlack.

Vorzugsweise wird der Tauchlack mit einer elektrisch leitenden Anode und mit dem als Kathode geschalteten elektrisch leitfähigen Substrat in Berührung gebracht. Alternativ muss der Tauchlack aber nicht direkt mit einer elektrisch leitenden Anode in Berührung gebracht werden, beispielsweise wenn die Anode vom Tauchlackbad separiert vorliegt, beispielsweise über eine für Anionen permeable Anionenaustauschermembran.

Beim Durchgang von elektrischem Strom zwischen Anode und Kathode wird ein fest haftender Lackfilm auf der Kathode, d.h. auf dem Substrat abgeschieden. Die angelegte Spannung liegt vorzugsweise in einem Bereich von 50 bis 500 Volt.

Schritt (1) des erfindungsgemäßen Verfahrens wird vorzugsweise bei einer Tauchbadtemperatur in einem Bereich von 20 bis 45°C, noch bevorzugter in einem Bereich von 22 bis 42°C, besonders bevorzugt in einem Bereich von 24 bis 39°C, ganz besonders bevorzugt in einem Bereich von 26 bis 36°C, insbesondere bevorzugt in einem Bereich von 27 bis 33°C wie beispielsweise in einem Bereich von 28 bis 30°C durchgeführt. In einer anderen bevorzugten Ausführungsform des erfindungsgemäßen Verfahrens wird Schritt (1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31°C oder von höchstens 30°C oder von höchstens 29°C oder von höchstens 28°C, durchgeführt. In einer weiteren anderen bevorzugten Ausführungsform des erfindungsgemäßen Verfahrens wird Schritt (1) bei einer Tauchbadtemperatur ≤ 32°C wie beispielsweise ≤ 31°C oder ≤ 30°C oder ≤ 29°C oder ≤ 28°C oder ≤ 27°C oder ≤ 26°C oder ≤ 25°C oder ≤ 24°C oder ≤ 23°C durchgeführt.

Vorzugsweise handelt es sich bei erfindungsgemäß eingesetzten Tauchlack um einen wässrigen Tauchlack.

Der erfindungsgemäß eingesetzte Tauchlack umfasst wenigstens ein Bindemittel. Das erfindungsgemäß eingesetzte Bindemittel ist vorzugsweise ein in Wasser gelöstes oder dispergiertes Bindemittel.

Alle üblichen dem Fachmann bekannten Bindemittel eignen sich dabei als Bindemittel-Komponente des erfindungsgemäß eingesetzten Tauchlacks.

Der Tauchlack umfasst vorzugsweise wenigstens ein Bindemittel, welches reaktive funktionelle Gruppen aufweist, die eine Vernetzungsreaktion ermöglichen. Das im Tauchlack enthaltene Bindemittel ist dabei ein selbst-vernetzendes oder ein fremd-vernetzendes Bindemittel, vorzugsweise ein fremd-vernetzendes Bindemittel. Um eine Vernetzungsreaktion zu ermöglichen, enthält der erfindungsgemäß eingesetzte Tauchlack daher neben dem wenigstens einen Bindemittel vorzugsweise zudem wenigstens ein Vernetzungsmittel. Das Bindemittel ist vorzugsweise ein polymeres Harz.

Das im erfindungsgemäß eingesetzten Tauchlack eingesetzte Bindemittel bzw. das gegebenenfalls enthaltene Vernetzungsmittel ist vorzugsweise thermisch vernetzbar. Vorzugsweise sind das Bindemittel und das gegebenenfalls enthaltene Vernetzungsmittel beim Erwärmen auf Temperaturen oberhalb Raumtemperatur, d.h. oberhalb von 18-23°C vernetzbar. Vorzugsweise sind das Bindemittel und das gegebenenfalls enthaltene Vernetzungsmittel erst bei Ofentemperaturen ≥ 80°C, bevorzugter ≥ 110°C, besonders bevorzugt ≥ 130°C und ganz besonders bevorzugt ≥ 140°C vernetzbar. Besonders vorteilhaft sind das Bindemittel das gegebenenfalls enthaltene Vernetzungsmittel bei 100 bis 250°C, noch bevorzugter bei 125 bis 250°C und besonders bevorzugt bei 150 bis 250°C vernetzbar.

Vorzugsweise umfasst der erfindungsgemäß eingesetzte Tauchlack wenigstens ein Bindemittel, welches reaktive funktionelle Gruppen aufweist, die vorzugsweise in Kombination mit wenigstens einem Vernetzungsmittel eine Vernetzungsreaktion ermöglichen.

Jede übliche dem Fachmann bekannte vernetzbare reaktive funktionelle Gruppe kommt dabei in Betracht. Der in Schritt (1) des erfindungsgemäßen Verfahrens auf dem Substrat vorzugsweise kathodisch zumindest teilweise abzuscheidende Tauchlack enthält daher vorzugsweise wenigstens ein Bindemittel, welches reaktive funktionelle Gruppen ausgewählt aus der Gruppe bestehend aus gegebenenfalls substituierten primären Amino-Gruppen, gegebenenfalls substituierten sekundären Amino-Gruppen, gegebenenfalls substituierten tertiären Amino-Gruppen, Hydroxyl-Gruppen, Thiol-Gruppen, Carboxyl-Gruppen, Gruppen, welche wenigstens eine C=C-Doppelbindung aufweisen, wie beispielsweise Vinyl-Gruppen oder (Meth)acrylatGruppen, und Epoxid-Gruppen aufweist, wobei die primären, sekundären und tertiären Amino-Gruppen gegebenenfalls mit ein oder mehreren wie beispielsweise 2 oder 3 Substituenten jeweils unabhängig voneinander ausgewählt aus der Gruppe bestehend aus $C_{1-6}$-aliphatischen Resten wie beispielsweise Methyl, Ethyl, n-Propyl oder iso-Propyl substituiert sein können, wobei diese $C_{1-6}$-aliphatischen Reste wiederum gegebenenfalls mit 1, 2 oder 3 Substituenten jeweils unabhängig voneinander ausgewählt aus der Gruppe bestehend aus OH, $NH_2$, $NH(C_{1-6}$-Alkyl) und $N(C_{1-6}$-Alkyl)$_2$ substituiert sein können. Besonders bevorzugt ist wenigstens ein Bindemittel, welches reaktive funktionelle Gruppen ausgewählt aus der Gruppe bestehend aus gegebenenfalls substituierten primären Amino-Gruppen, gegebenenfalls substituierten sekundären Amino-Gruppen, gegebenenfalls substituierten tertiären Amino-Gruppen, und Hydroxyl-Gruppen aufweist, wobei die primären, sekundären und tertiären Amino-Gruppen gegebenenfalls mit ein oder mehreren wie beispielsweise 2 oder 3 Substituenten jeweils unabhängig voneinander ausgewählt aus der Gruppe bestehend aus $C_{1-6}$-aliphatischen Resten wie beispielsweise Methyl, Ethyl, n-Propyl oder iso-Propyl substituiert sein können, wobei diese $C_{1-6}$-aliphatischen Reste wiederum gegebenenfalls mit 1, 2 oder 3 Substituenten jeweils unabhängig voneinander ausgewählt aus der Gruppe bestehend aus OH, $NH_2$, $NH(C_{1-6}$-Alkyl) und $N(C_{1-6}$-Alkyl)$_2$ substituiert sein können.

Vorzugsweise ist das im erfindungsgemäß eingesetzten Tauchlack enthaltenen Bindemittel wenigstens ein Epoxid-basiertes Harz, insbesondere wenigstens ein kationisches Epoxid-basiertes und Amin-modifiziertes Harz. Die Herstellung solcher kationischer Amin-modifizierter Epoxid-basierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem gegebenenfalls modifizierten Polyepoxid, d.h. wenigstens einer gegebenenfalls modifizierten Verbindung mit zwei oder mehr Epoxid-Gruppen, und wenigstens einem vorzugsweise wasserlöslichen Amin, vorzugsweise wenigstens einem solchen primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:

a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

b) aminogruppenhaltige Verbindungen, wie Diethylamin oder Ethylhexylamin oder Diamine mit sekundären Aminogruppen, z. B. N,N'-Dialkylalykendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester $\alpha$-verzweigter Fettsäuren, wie der Versaticsäure, oder

c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis-(hydroximethyl)cyclohexan, 1,1-Isopropyliden-bis-(p- phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Beispiele für einsetzbare Amine sind Mono- und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in die das gegebenenfalls modifizierte Polyepoxid besteht in der Umsetzung von Epoxidgruppen des Polyepoxids mit Amin-Salzen.

Vorzugsweise umfasst der erfindungsgemäß eingesetzte Tauchlack wenigstens ein Vernetzungsmittel, welches eine Vernetzungsreaktion mit den reaktiven funktionellen Gruppen des Bindemittels des Tauchlacks ermöglicht.

Alle dem Fachmann bekannten üblichen Vernetzungsmittel können eingesetzt werden wie beispielsweise Phenoplaste, polyfunktionelle Mannich-Basen, Melaminharze, Benzoguanamin-Harze, und/oder blockierte Polyisocyanate.

Ein besonders bevorzugtes Vernetzungsmittel ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, $\omega,\omega'$-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat ($H_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Das Vernetzungsmittel wird vorzugsweise in einer Menge von 5 bis 60 Gew.-%, bevorzugt 20 bis 40 Gew.-%, bezogen auf das Gesamtgewicht des Bindemittels, in dem Tauchlack eingesetzt.

Vorzugsweise weist das im Tauchlack enthaltene Bindemittel einen nicht-flüchtigen Anteil, d.h. einen Festkörper-Anteil, von 5 bis 70 Gew.-%, besonders bevorzugt von 6 bis 55 Gew.-%, ganz besonders bevorzugt von 7 bis 40 Gew.-%, insbesondere von 8 bis 30 Gew.-%, jeweils bezogen auf das Gesamtgewicht des Bindemittels, auf. Bestimmungsmethoden zur Bestimmung des Festkörper-Anteils sind dem Fachmann bekannt. Vorzugsweise wird der Festkörper-Anteil gemäß DIN EN ISO 3251 bestimmt.

Der Tauchlack kann zudem je nach erwünschter Anwendung wenigstens ein Pigment enthalten.

Vorzugsweise ist ein solches im Tauchlack enthaltenes Pigment ausgewählt aus der Gruppe bestehend aus organischen und anorganischen, farbgebenden und füllenden Pigmenten.

Beispiele für geeignete anorganische farbgebende Pigmente sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Der Pigment-Gehalt in den erfindungsgemäß bereitgestellten Tauchlack kann je nach Verwendungszweck und nach der Natur der Pigmente variieren. Vorzugsweise liegt der Gehalt, bezogen auf den erfindungsgemäß bereitgestellten vorzugsweise wässrigen Tauchlack bei 0,1 bis 60 Gew.-%, bevorzugt bei 1,0 bis 50 Gew.-%, besonders bevorzugt bei 2,0 bis 45 Gew.-%, ganz besonders bevorzugt bei 3,0 bis 40 Gew.-% und insbesondere bei 4,0 bis 35 Gew.-%.

Der erfindungsgemäß eingesetzte Tauchlack kann je nach erwünschter Anwendung ein oder mehrere üblicherweise eingesetzte Additive enthalten. Vorzugsweise sind diese Additive ausgewählt aus der Gruppe bestehend aus Benetzungsmitteln, Emulgatoren, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise Hitze-Stabilisatoren, Prozess-Stabilisatoren und UV- und/oder Licht-Stabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf den erfindungsgemäß bereitgestellten Tauchlack bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

Vorzugsweise wird der Tauchlack in Schritt (1) des erfindungsgemäßen Verfahrens so appliziert, dass die resultierende Tauchlackschicht eine Trockenschichtdicke im Bereich von 5 bis 40 μm, besonders bevorzugt von 10 bis 30 μm, aufweist.

### Schritte (1a) und (1b)

In einer bevorzugten Ausführungsform umfasst das erfindungsgemäße Verfahren ferner einen Schritt (1a), der vorzugsweise auf den Schritt (1) folgt, aber noch vor dem Schritt (2) durchgeführt wird, nämlich eine

(1a) Spülung des nach Schritt (1) erhältlichen mit dem Tauchlack zumindest teilweise beschichteten Substrats mit Wasser und/oder
mit Ultrafiltrat.

Der Begriff "Ultrafiltrat" bzw. "Ultrafiltration" insbesondere im Zusammenhang mit der Tauchlackierung ist dem Fachmann bekannt und beispielsweise definiert im Römpp Lexikon, Lacke und Druckfarben, Georg Thieme Verlag 1998.
Die Durchführung des Schritts (1a) ermöglicht die Rückführung überschüssiger nach Schritt (1) auf dem zumindest teilweise beschichteten Substrat befindlicher Tauchlack-Bestandteile in das Tauchlackbad.
Das erfindungsgemäße Verfahren kann ferner einen optionalen Schritt (1b), der vorzugsweise auf den Schritt (1) oder (1a), besonders bevorzugt auf den Schritt (1a) folgt, aber noch vor dem Schritt (2) durchgeführt wird, umfassen, nämlich ein

(1b) Kontaktieren des nach Schritt (1) oder Schritt (1a), vorzugsweise nach Schritt (1a), erhältlichen mit dem Tauchlack zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

### Schritt (2)

Schritt (2) des erfindungsgemäßen Verfahrens betrifft eine Kontaktierung des mit dem Tauchlack zumindest teilweise beschichteten Substrats mit einer wässrigen Zusammensetzung, wobei die in Schritt (2) eingesetzte wässrige Zusammensetzung eine wässrige Sol-Gel-Zusammensetzung ist, und der Schritt (2) vor einer Aushärtung des elektrophoretisch abgeschiedenen Tauchlacks erfolgt.
Schritt (2) sieht damit eine Nachbehandlung des mit dem Tauchlack zumindest teilweise beschichteten Substrats mit einer wässrigen Sol-Gel-Zusammensetzung vor.
Unter dem Begriff "Kontaktierung" bzw. "Kontaktieren" im Sinne der vorliegenden Erfindung wird vorzugsweise ein Eintauchen des mit dem Tauchlack zumindest teilweise beschichteten Substrats in die in Schritt (2) eingesetzte wässrige Sol-Gel-Zusammensetzung, ein Besprühen oder Bespritzen des mit dem Tauchlack zumindest teilweise beschichteten Substrats mit der in Schritt (2) eingesetzten wässrigen Sol-Gel-Zusammensetzung oder ein Aufwalzen der in Schritt (2) eingesetzten wässrigen Sol-Gel-Zusammensetzung auf das mit dem Tauchlack zumindest teilweise beschichtete Substrat verstanden. Insbesondere wird unter dem Begriff "Kontaktierung" bzw. "Kontaktieren" im Sinne der vorliegenden Erfindung ein Eintauchen des mit dem Tauchlack zumindest teilweise beschichteten Substrats in die in Schritt (2) eingesetzte wässrige Sol-Gel-Zusammensetzung verstanden.
Schritt (2) des erfindungsgemäßen Verfahrens wird vorzugsweise nach Schritt (1) bzw. nach den Schritten (1), (1a) und (1b) durchgeführt. In diesem Fall erfolgt in Schritt (2) eine Kontaktierung des nach Schritt (1) erhältlichen mit dem Tauchlack zumindest teilweise beschichteten Substrats mit der wässrigen Zusammensetzung. Falls das erfindungsgemäße Verfahren zusätzlich einen Schritt (1a) umfasst, welcher vorzugsweise auf den Schritt (1) folgt, aber noch vor dem Schritt (2) durchgeführt wird, so erfolgt in Schritt (2) eine Kontaktierung des nach Schritt (1) erhältlichen und nach Schritt (1a) mittels Spülung behandelten mit dem Tauchlack zumindest teilweise beschichteten Substrats mit der wässrigen Zusammensetzung.
Die in Schritt (2) des erfindungsgemäßen Verfahrens eingesetzte wässrige Zusammensetzung weist vorzugsweise eine Temperatur im Bereich von 8°C bis 60°C, noch bevorzugter im Bereich von 10°C bis 55°C, besonders bevorzugt im Bereich von 12°C bis 50°C, ganz besonders bevorzugt im Bereich von 14°C bis 45°C, insbesondere im Bereich von 15°C bis 40°C oder im Bereich von 15°C bis 37°C, noch bevorzugter im Bereich von 17°C bis 35°C, am meisten bevorzugt im Bereich von 18°C bis 30°C oder im Bereich von 18°C bis 25°C, auf.
Die Dauer der Kontaktierung gemäß Schritt (2) des erfindungsgemäßen Verfahrens, d.h. die Dauer der Kontaktierung des mit dem Tauchlack zumindest teilweise beschichteten Substrats mit der wässrigen Zusammensetzung liegt vorzugsweise im Bereich von 5 bis 1000 Sekunden, besonders bevorzugt im Bereich von 10 bis 800 Sekunden, ganz besonders bevorzugt im Bereich von 10 bis 600 Sekunden, noch bevorzugter im Bereich von 10 bis 500 Sekunden.

In einer anderen bevorzugten Ausführungsform erfolgt die Kontaktierung gemäß Schritt (2) des erfindungsgemäßen Verfahrens über eine Dauer von wenigstens 5 Sekunden, vorzugsweise von wenigstens 10 Sekunden, besonders bevorzugt von wenigstens 15 Sekunden, insbesondere von wenigstens 20 Sekunden, am meisten bevorzugt von wenigstens 25 Sekunden.

Die in Schritt (2) des erfindungsgemäßen Verfahrens eingesetzte Zusammensetzung ist eine wässrige Zusammensetzung.

Unter dem Begriff "wässrig" im Zusammenhang mit der in Schritt (2) des erfindungsgemäßen Verfahrens eingesetzten wässrigen Zusammensetzung bzw. wässrigen Sol-Gel-Zusammensetzung wird vorzugsweise eine flüssige Zusammensetzung verstanden, die - als flüssiges Verdünnungsmittel, d.h. als flüssiges Lösemittel und/oder Dispergiermittel, insbesondere als Lösemittel - Wasser als Hauptkomponente enthält. Gegebenenfalls kann die erfindungsgemäß eingesetzte wässrige Zusammensetzung jedoch zusätzlich einen Anteil an wenigstens einem organischen Lösemittel, vorzugsweise wenigstens einem mit Wasser mischbaren organischen Lösemittel enthalten. Insbesondere bevorzugt sind solche vorzugsweise mit Wasser mischbaren organischen Lösemittel ausgewählt aus der Gruppe bestehend aus Alkoholen wie Methanol, Ethanol, 1-Propanol und 2-Propanol, organische Carbonsäuren wie Ameisensäure, Essigsäure und Propionsäure, Ketonen wie Aceton und Glykolen wie Ethylenglykol oder Propylenglykol, sowie Gemischen davon. Vorzugsweise beträgt der Anteil dieser vorzugsweise mit Wasser mischbaren organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-%, noch bevorzugter höchstens 2,5 Gew.-%, am meisten bevorzugt höchstens 1,0 Gew.-%, jeweils bezogen auf den Gesamtanteil der in Schritt (2) des erfindungsgemäßen Verfahrens eingesetzten wässrigen Zusammensetzung enthaltenen flüssigen Verdünnungsmitteln, d.h. flüssigen Lösemitteln und/oder Dispergiermitteln, insbesondere Lösemitteln.

Vorzugsweise liegt die in Schritt (2) des erfindungsgemäßen Verfahrens eingesetzte wässrige Zusammensetzung in Form einer wässrigen Lösung oder wässrigen Dispersion, insbesondere in Form einer wässrigen Lösung vor.

Die in Schritt (2) des erfindungsgemäßen Verfahrens eingesetzte wässrige Zusammensetzung weist vorzugsweise einen pH-Wert im Bereich von 2,0 bis 10,0, besonders bevorzugt von im Bereich von 2,5 bis 8,5 oder im Bereich von 2,5 bis 8,0, ganz besonders bevorzugt von im Bereich von 3,0 bis 7,0 oder im Bereich von 3,0 bis 6,5 oder im Bereich von 3,0 bis 6,0, insbesondere im Bereich von 3,5 bis 6,0 oder im Bereich von 3,5 bis 5,5, insbesondere bevorzugt im Bereich von 3,7 bis 5,5, am meisten bevorzugt im Bereich von 3,9 bis 5,5 oder 4,0 bis 5,5 auf. Methoden zur Einstellung von pH-Werten in wässrigen Zusammensetzungen sind dem Fachmann bekannt. Vorzugsweise erfolgt die Einstellung des erwünschten pH-Werts der in Schritt (2) des erfindungsgemäßen Verfahrens eingesetzten wässrigen Zusammensetzung durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure oder und/oder Salpetersäure. Eine geeignete organische Säure ist beispielsweise Essigsäure. Ganz besonders bevorzugt erfolgt die Einstellung des erwünschten pH-Werts der in Schritt (2) des erfindungsgemäßen Verfahrens eingesetzten wässrigen Zusammensetzung durch Zugabe von Phosphorsäure.

Die in Schritt (2) des erfindungsgemäßen Verfahrens eingesetzte wässrige Zusammensetzung ist eine wässrige Sol-Gel-Zusammensetzung.

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird eine wässrige Zusammensetzung verstanden, zu deren Herstellung wenigstens eine Ausgangsverbindung, welche wenigstens ein Metallatom und/oder Halbmetallatom wie beispielsweise $M^1$ und/oder $M^2$ und wenigstens zwei hydrolysierbare Gruppen wie beispielsweise zwei hydrolysierbare Gruppen $X^1$ aufweist, und welche ferner wenigstens einen nicht hydrolysierbaren organischen Rest wie beispielsweise $R^1$ aufweist, mit Wasser umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden.

Bei dieser Umsetzung werden in einem ersten Hydrolyse-Schritt die wenigstens zwei hydrolysierbaren Gruppen abgespalten und innerhalb der wenigstens einen Ausgangsverbindung durch OH-Gruppen ersetzt, wodurch die Ausbildung von Metall-OH-Bindungen bzw. Halbmetall-OH-Bindungen innerhalb der im ersten Schritt eingesetzten wenigstens einen Ausgangsverbindung resultiert (Hydrolyse-Schritt). In einem zweiten Schritt erfolgt eine Kondensation zweier im ersten Schritt gebildeter Moleküle beispielsweise durch Reaktion jeweils einer der so gebildeten Metall-OH-Bindungen des einen Moleküls mit einer der so gebildeten Metall-OH-Bindungen des zweiten Moleküls unter Wasserabspaltung (Kondensations-Schritt). Das so gebildete Molekül, welches beispielsweise wenigstens eine Metall-O-Metall-Gruppe (oder Metall-O-Halbmetall-Gruppe oder Halbmetall-O-Halbmetall-Gruppe) und zudem insgesamt wenigstens zwei hydrolysierbare Gruppen aufweist, kann dann erneut hydrolysiert werden und analog mit weiteren nach dem ersten Hydrolyse-Schritt erhältlichen Verbindungen reagieren und die dann analog gebildete resultierende Verbindung entsprechend weiterreagieren, so dass es zur Ausbildung von Ketten und insbesondere von zwei- oder dreidimensionalen Strukturen kommt. Dieses wenigstens zweischrittige Verfahren umfassend wenigstens den ersten Hydrolyse-Schritt und wenigstens den zweiten Kondensations-Schritt wird als Sol-Gel-Verfahren oder als Sol-Gel-Prozess bezeichnet. Je nach Vernetzungsgrad durch die Kondensation entsteht so ein Sol bzw. ein Gel, wodurch die wässrige Zusammensetzung als Sol-Gel-Zusammensetzung bezeichnet wird. Dabei wird vorzugsweise unter einer reinen Sol-Zusammensetzung eine Zusammensetzung verstanden, in der die Reaktionsprodukte kolloidal gelöst vorliegen. Eine Sol-Zusammensetzung zeichnet sich durch eine niedrigere Viskosität aus als eine Gel-Zusammensetzung. Vorzugsweise wird unter einer reinen Gel-Zusammensetzung eine Zusammensetzung verstanden, die sich durch eine hohe Viskosität auszeichnet und die eine Gel-Struktur aufweist. Der Übergang von einer Sol- zu einer Gel-Zusammensetzung ist vorzugsweise durch einen sprunghaften Anstieg der Viskosität gekennzeichnet.

Vorzugsweise wird die zur Herstellung der erfindungsgemäß eingesetzten wässrigen Sol-Gel-Zusammensetzung benötigte wenigstens eine Ausgangsverbindung dabei durch Einrühren in Wasser oder Zugabe von Wasser zu der wenigstens einen Ausgangsverbindung hergestellt. Dies erfolgt vorzugsweise bei einer Temperatur, die im Bereich von 15°C bis 40°C oder im Bereich von 15°C bis 37°C, noch bevorzugter im Bereich von 17°C bis 35°C, am meisten bevorzugt im Bereich von 18°C bis 30°C oder im Bereich von 18°C bis 25°C, liegt. Um die Herstellung der erfindungsgemäß eingesetzten wässrigen Sol-Gel-Zusammensetzung zu beschleunigen, kann die Herstellung gegebenenfalls auch bei höheren Temperaturen als 40°C durchgeführt werden, beispielsweise bei einer Temperatur von bis zu 80°C, d.h. beispielsweise in einem Bereich von 15°C bis 80°C. Vorzugsweise wird die so erhaltene wässrige Sol-Gel-Zusammensetzung vor ihrem Einsatz in Schritt (2) des erfindungsgemäßen Verfahrens über eine Dauer im Bereich von 1-72 Stunden bei einer Temperatur von 18-25 °C ruhen gelassen.

Die zur Herstellung der wässrigen Sol-Gel-Zusammensetzung eingesetzte wenigstens eine Ausgangsverbindung, welche wenigstens ein Metallatom und/oder Halbmetallatom wie beispielsweise $M^1$ und/oder $M^2$ und wenigstens zwei hydrolysierbare Gruppen wie beispielsweise wenigstens zwei hydrolysierbare Gruppen $X^1$ aufweist, weist vorzugsweise zudem wenigstens einen nicht hydrolysierbaren organischen Rest auf. Dieser nicht hydrolysierbare organische Rest wie beispielsweise ein entsprechender Rest $R^1$ ist vorzugsweise direkt an das in der wenigstens einen Ausgangsverbindung enthaltene Metallatom und/oder Halbmetallatom wie beispielsweise $M^1$ und/oder $M^2$ mittels einer Einfachbindung gebunden. In diesem Fall kommt es bei dem wenigstens zweischrittigen Verfahren umfassend wenigstens den ersten Hydrolyse-Schritt und wenigstens den zweiten Kondensations-Schritt zur Ausbildung von Ketten und insbesondere von zwei- oder dreidimensionalen Strukturen, welche sowohl anorganische als auch organische Gruppen aufweisen. In diesem Fall kann die so erhaltene Sol-Gel-Zusammensetzung als anorganisch-organische Hybrid-Sol-Gel-Zusammensetzung bezeichnet werden.

Gegebenenfalls enthält der wenigstens eine nicht hydrolysierbare organische Rest wie beispielsweise der Rest $R^1$ wenigstens eine reaktive funktionelle Gruppe, welche vorzugsweise ausgewählt ist aus der Gruppe bestehend aus primären Amino-Gruppen, sekundären Amino-Gruppen, Epoxid-Gruppen, Thiol-Gruppen, Isocyanat-Gruppen, phosphorhaltige Gruppen wie Phosphonat-Gruppen, Silan-Gruppen, die gegebenenfalls wiederum wenigstens einen nicht hydrolysierbaren organischen Rest aufweisen können, welcher gegebenenfalls wenigstens eine reaktive funktionelle Gruppe aufweist, und Gruppen, die eine ethylenisch ungesättige Doppelbindung aufweisen wie Vinyl-Gruppen oder (Meth)acryl-Gruppen, ganz besonders bevorzugt ausgewählt ist aus der Gruppe bestehend aus primären Amino-Gruppen, sekundären Amino-Gruppen, Epoxid-Gruppen, Thiol-Gruppen, und Gruppen, die eine ethylenisch ungesättige Doppelbindung aufweisen wie Vinyl-Gruppen oder (Meth)acryl-Gruppen, insbesondere ausgewählt ist aus der Gruppe bestehend aus primären Amino-Gruppen und Epoxid-Gruppen.

Der Ausdruck "(Meth)acryl" umfasst im Sinne der vorliegenden Erfindung jeweils die Bedeutungen "Methacryl" und/oder "Acryl".

Unter dem Ausdruck "nicht hydrolysierbarer organischer Rest, welcher wenigstens eine reaktive funktionelle Gruppe aufweist" wird im Zusammenhang mit einem nicht hydrolysierbaren organischen Rest wie beispielsweise dem Rest $R^1$ im Sinne der vorliegenden Erfindung vorzugsweise verstanden, dass der nicht hydrolysierbare organische Rest wenigstens eine solche funktionelle Gruppe aufweist, die eine Reaktivität gegenüber den gegebenenfalls im Bindemittel des Tauchlacks und/oder den im gegebenenfalls im Tauchlack vorhandenen Vernetzungsmittel enthaltenen reaktiven funktionellen Gruppen aufweist. Durch eine Reaktion entsprechender funktioneller Gruppen kann es dabei zur Ausbildung von kovalenten Bindungen kommen.

Der wenigstens eine nicht hydrolysierbare organische Rest wie beispielsweise der Rest $R^1$ muss jedoch nicht zwingend wenigstens eine reaktive funktionelle Gruppe aufweisen, sondern kann auch ein nicht hydrolysierbarer organischer Rest sein, der keine reaktiven funktionellen Gruppe aufweist.

Unter dem Ausdruck "nicht hydrolysierbarer organischer Rest, welcher keine reaktive funktionelle Gruppe aufweist" wird im Zusammenhang mit einem nicht hydrolysierbaren organischen Rest wie beispielsweise dem Rest $R^1$ im Sinne der vorliegenden Erfindung vorzugsweise verstanden, dass der nicht hydrolysierbare organische Rest keine solche funktionelle Gruppe aufweist, die eine Reaktivität gegenüber den gegebenenfalls im Bindemittel des Tauchlacks und/oder den im gegebenenfalls im Tauchlack vorhandenen Vernetzungsmittel enthaltenen reaktiven funktionellen Gruppen aufweist.

Eine so erhaltene wässrige Sol-Gel-Zusammensetzung, in der die wenigstens eine Ausgangsverbindung, welche neben den wenigstens zwei hydrolysierbaren Gruppen wie beispielsweise wenigstens zwei hydrolysierbaren Gruppen $X^1$ wenigstens einen nicht hydrolysierbaren organischen Rest wie beispielsweise $R^1$ aufweist, zeichnet sich insbesondere dadurch aus, dass bei ihrer Herstellung kein kolloidales Hydroxid oder kolloidales Oxid, welches beispielsweise in EP 1 510 558 A1 oder WO 03/090938 A1 offenbart ist, sondern eine anorganisch-organische Hybrid-Sol-Gel-Zusammensetzung entsteht, welche sich besser auf den in Schritt (1) des erfindungsgemäßen Verfahrens aufgetragenen Tauchlack aufbringen lässt als ein kolloidales Hydroxid oder kolloidales Oxid gemäß EP 1 510 558 A1 oder WO 03/090938 A1, insbesondere da mit einer solchen wässrigen Sol-Gel-Zusammensetzung eine Filmbildung und zudem keine kovalenten Bindungen mit im Tauchlack enthaltenem Bindemittel und gegebenenfalls Vernetzungsmittel ausgebildet werden können.

In einer bevorzugten Ausführungsform ist die in Schritt (2) eingesetzte wässrige Sol-Gel-Zusammensetzung erhältlich durch Umsetzung

von wenigstens zwei Ausgangsverbindungen, welche jeweils unabhängig voneinander wenigstens ein Metallatom und/oder Halbmetallatom wie beispielsweise $M^1$ und zudem jeweils unabhängig voneinander wenigstens zwei hydrolysierbare Gruppen wie beispielsweise wenigstens zwei hydrolysierbare Gruppen $X^1$ aufweisen,

wobei die wenigstens zwei hydrolysierbaren Gruppen vorzugsweise jeweils direkt an das in den wenigstens zwei Ausgangsverbindungen jeweils enthaltene Metallatom und/oder Halbmetallatom mittels Einfachbindungen gebunden sind, mit Wasser,

wobei vorzugsweise wenigstens eine der wenigstens zwei Ausgangsverbindungen neben den wenigstens zwei hydrolysierbaren Gruppen zudem wenigstens eine nicht hydrolysierbare Gruppe, besonders bevorzugt wenigstens einen nicht hydrolysierbaren organischen Rest wie beispielsweise dem Rest $R^1$ aufweist, wobei diese nicht hydrolysierbare Gruppe insbesondere direkt an das in der wenigstens einen Ausgangsverbindung enthaltene Metallatom und/oder Halbmetallatom wie $M^1$ mittels einer Einfachbindung gebunden ist und dabei gegebenenfalls wenigstens eine reaktive funktionelle Gruppe, welche vorzugsweise ausgewählt ist aus der Gruppe bestehend aus primären Amino-Gruppen, sekundären Amino-Gruppen, Epoxid-Gruppen, Thiol-Gruppen, Isocyanat-Gruppen, phosphorhaltige Gruppen wie Phosphonat-Gruppen, Silan-Gruppen, die gegebenenfalls wiederum wenigstens einen nicht hydrolysierbaren organischen Rest aufweisen können, welcher gegebenenfalls wenigstens eine reaktive funktionelle Gruppe aufweist, und Gruppen, die eine ethylenisch ungesättige Doppelbindung aufweisen wie Vinyl-Gruppen oder (Meth)acryl-Gruppen, ganz besonders bevorzugt ausgewählt ist aus der Gruppe bestehend aus primären Amino-Gruppen, sekundären Amino-Gruppen, Epoxid-Gruppen, Thiol-Gruppen, und Gruppen, die eine ethylenisch ungesättige Doppelbindung aufweisen wie Vinyl-Gruppen oder (Meth)acryl-Gruppen, insbesondere ausgewählt ist aus der Gruppe bestehend aus primären Amino-Gruppen und Epoxid-Gruppen, enthält.

Vorzugsweise ist die in Schritt (2) des erfindungsgemäßen Verfahrens eingesetzte wässrige Sol-Gel-Zusammensetzung erhältlich durch Umsetzung von wenigstens einer Verbindung

$$(A1) \qquad (M^1)^x(X^1)_a(R^1),$$

und/oder

$$(A2) \qquad (M^2)^y(X^2)_b(R^2)(R^3),$$

vorzugsweise von wenigstens einer Verbindung (A1),
mit Wasser, worin

$M^1$ und $M^2$      jeweils unabhängig voneinander für ein Metallatom oder ein Halbmetallatom stehen, wobei vorzugsweise wenigstens eine der Variablen $M^1$ und $M^2$, besonders bevorzugt beide der Variablen $M^1$ und $M^2$, für Si steht/stehen,

$X^1$ und $X^2$      jeweils unabhängig voneinander für eine hydrolysierbare Gruppe stehen,

$x$      für die Wertigkeit des Metallatoms oder Halbmetallatoms $M^1$ steht, vorzugsweise jeweils für +3 oder +4 steht,

$y$      für die Wertigkeit des Metallatoms oder Halbmetallatoms $M^2$ steht, vorzugsweise jeweils für +3 oder +4 steht,

$R^1$      für $X^1$, einen nicht hydrolysierbaren organischen Rest, für $(T)(M^1)^x(X^1)_c$ oder für $(U)[(M^1)^x(X^1)_c]_2$, steht, vorzugsweise für einen nicht hydrolysierbaren organischen Rest, steht,

$R^2$    für einen nicht hydrolysierbaren organischen Rest steht,

$R^3$    für einen nicht hydrolysierbaren organischen Rest, für $(T)(M^1)^x(X^1)_c$, für $(U)[(M^1)^x(X^1)_c]_2$, für $(V)(M^2)^y(X^2)_d(R^2)$ oder für $(W)[(M^2)^y(X^2)_d(R^2)]_2$ steht, vorzugsweise für einen nicht hydrolysierbaren organischen Rest, steht,

a    für x steht, wenn $R^1$ für $X^1$ steht oder

a    für x-1 steht, wenn $R^1$ für einen nicht hydrolysierbaren organischen Rest, für $(T)(M^1)^x(X^1)_c$ oder für $(U)[(M^1)^xX^1)_c]_2$ steht, jeweils unter der Voraussetzung, dass a mindestens für 2 steht,

b    für y-2 steht, unter der Voraussetzung, dass b mindestens für 2 steht,

T, U, V und W    jeweils unabhängig voneinander für einen Rest stehen, der 1 bis 30 Kohlenstoffatome aufweist und gegebenenfalls bis zu 10 Heteroatome und Heteroatomgruppen ausgewählt aus der Gruppe bestehend aus O, S und N aufweisen kann,

c    für x-1 steht, vorzugsweise unter der Voraussetzung, dass c mindestens für 2 steht, und

d    für y-2 steht, vorzugsweise unter der Voraussetzung, dass d mindestens für 2 steht,

mit Wasser.

Dem Fachmann ist der Begriff einer "hydrolysierbaren Gruppe" bekannt. Jede übliche dem Fachmann bekannte hydrolysierbare Gruppe wie beispielsweise $X^1$ oder $X^2$ kann als Bestandteil der wenigstens einen zur Herstellung der wässrigen Sol-Gel-Zusammensetzung eingesetzten Ausgangsverbindung, insbesondere der wenigstens einen Komponente (A1) und/oder (A2), dienen.

Unter einer "hydrolysierbaren Gruppe" wie beispielsweise der Gruppen $X^1$ und $X^2$ wird im Sinne der vorliegenden Erfindung vorzugsweise eine hydrolysierbare Gruppe ausgewählt aus der Gruppe bestehend aus Halogeniden, vorzugsweise Fluroriden, Chloriden, Bromiden und Iodiden, insbesondere Fluoriden und Chloriden, Alkoxy-Gruppen, vorzugsweise Alkoxy-Gruppen O-$R^a$, worin $R^a$ für einen gegebenenfalls mit einer $C_{1-6}$-Alkoxy-Gruppe substituierten $C_{1-16}$-aliphatischen Rest, vorzugsweise $C_{1-10}$-aliphatischen Rest, besonders bevorzugt $C_{1-6}$-aliphatischen Rest, insbesondere $C_{1-6}$-Alkyl-Rest wie für Methyl, Ethyl, n-Propyl, iso-Propyl, n-Butyl, iso-Butyl, oder tert-Butyl, steht, Carboxylat-Gruppen, vorzugsweise $C_{1-6}$-Carboxylat-Gruppen, insbesondere Carboxylat-Gruppen ausgewählt aus der Gruppe bestehend aus Acetat und besonders bevorzugt Diketonat-Gruppen ausgewählt aus der Gruppe bestehend aus Acetylacetonat, Acetonylacetonat und Diacetylat.

Besonders bevorzugt wird unter einer "hydrolysierbaren Gruppe" wie beispielsweise der der Gruppen $X^1$ und $X^2$ eine Alkoxy-Gruppe, vorzugsweise eine Alkoxy-Gruppe O-$R^a$, worin $R^a$ für einen gegebenenfalls mit einer $C_{1-6}$-Alkoxy-Gruppe substituierten $C_{1-16}$-aliphatischen Rest, vorzugsweise $C_{1-10}$-aliphatischen Rest, besonders bevorzugt $C_{1-6}$-aliphatischen Rest, insbesondere $C_{1-6}$-Alkyl-Rest wie für Methyl, Ethyl, n-Propyl, iso-Propyl, n-Butyl, iso-Butyl, oder tert.-Butyl, steht, verstanden.

Dem Fachmann ist der Begriff "Wertigkeit" im Zusammenhang mit Metallatomen oder Halbmetallatomen wie $M^1$ und $M^2$ bekannt. Vorzugsweise bezeichnet die Wertigkeit im Sinne der vorliegenden Erfindung die Oxidationszahl des jeweiligen Metallatoms oder Halbmetallatoms wie beispielsweise $M^1$ und $M^2$. Bevorzugt sind Wertigkeiten für x und y - jeweils unabhängig voneinander - von +2, +3 und +4, insbesondere von +3 und +4.

Geeignete Metallatome wie beispielsweise $M^1$ und $M^2$ sind alle üblichen Metallatome einschließlich Übergangsmetallatomen, die Bestandteil der wenigstens einen Ausgangsverbindung, insbesondere (A1) und/oder (A2), wie beispielsweise Al, Ti, Zr, und Fe, vorzugsweise Ti und Zr. Geeignete Halbmetallatome wie beispielsweise $M^1$ und $M^2$ sind alle üblichen Halbmetallatome, die Bestandteil der wenigstens einen Ausgangsverbindung, insbesondere (A1) und/oder (A2), sein können, wie beispielsweise B und Si, vorzugsweise Si.

Vorzugsweise sind die Metallatome und Halbmetallatome wie beispielsweise $M^1$ und $M^2$ jeweils unabhängig voneinander ausgewählt aus der Gruppe bestehend aus Al, Ti, Zr, Fe, B und Si, besonders bevorzugt ausgewählt aus der Gruppe bestehend aus Ti, Zr und Si, ganz besonders bevorzugt ausgewählt aus der Gruppe bestehend aus Zr und Si. Insbesondere bedeuten die Metallatome und Halbmetallatome wie beispielsweise $M^1$ und $M^2$ jeweils Si.

Insbesondere ist $M^1$ ausgewählt aus der Gruppe bestehend aus Al,Ti, Zr, Fe, B und Si, besonders bevorzugt ausgewählt aus der Gruppe bestehend aus Ti, Zr und Si, ganz besonders bevorzugt ausgewählt aus der Gruppe bestehend aus Zr und Si, insbesondere bedeutet $M^1$ Si. Vorzugsweise bedeutet $M^2$ Si.

Die Wertigkeiten x, y, und z der Metallatome und Halbmetallatome wie beispielsweise $M^1$ und $M^2$ sind dabei vorzugsweise so gewählt, dass die Metallatome und Halbmetallatome wie beispielsweise $M^1$ und $M^2$ jeweils unabhängig

voneinander ausgewählt sind aus der Gruppe bestehend aus $Al^{3+}$, $Ti^{4+}$, $Zr^{4+}$, $Fe^{3+}$, $Fe^{4+}$, $B^{3+}$ und $Si^{4+}$, besonders bevorzugt aus der Gruppe bestehend aus $Al^{3+}$, $Ti^{4+}$, $Zr^{4+}$ und $Si^{4+}$, ganz besonders bevorzugt aus der Gruppe bestehend aus $Ti^{4+}$, $Zr^{4+}$ und $Si^{4+}$, insbesondere jeweils für $Si^{4+}$ stehen.

Dem Fachmann ist der Begriff eines "nicht hydrolysierbaren organischen Restes" bekannt. Jeder übliche dem Fachmann bekannte organische Rest, der nicht hydrolysierbar ist, kann als Bestandteil der wenigstens einen zur Herstellung der wässrigen Sol-Gel-Zusammensetzung eingesetzten Ausgangsverbindung, insbesondere der wenigstens einen Komponente (A1) und/oder (A2) dienen.

Unter einem "nicht hydrolysierbaren organischen Rest" wird, beispielsweise im Zusammenhang mit den Resten $R^1$, $R^2$ und $R^3$- jeweils unabhängig voneinander - vorzugsweise ein nicht hydrolysierbarer organischer Rest ausgewählt aus der Gruppe bestehend aus $C_1$-$C_{10}$-aliphatischen Resten, $C_1$-$C_{10}$-heteroaliphatischen Resten, $C_3$-$C_{10}$-cycloaliphatischen Resten, 3-10- gliedrigen heterocycloaliphatischen Resten, 5-12 gliedrigen Aryl- oder Heteroaryl-Resten, über einen $C_{1-6}$-aliphatischen Rest gebundene $C_3$-$C_{10}$-cycloaliphatische Reste, über einen $C_{1-6}$-aliphatischen Rest gebundene 3-10-gliedrige heterocycloaliphatische Reste, über einen $C_{1-6}$-aliphatischen Rest gebundene 5-12 gliedrige Aryl- oder Heteroaryl-Reste, verstanden, wobei jeder diese Reste gegebenenfalls wenigstens eine reaktive funktionelle Gruppe enthalten kann, sofern die Bindung des nicht hydrolysierbaren organischen Restes an das Metallatom oder Halbmetallatomen wie beispielsweise $M^1$ und/oder $M^2$, insbesondere wenn $M^1$ und/oder $M^2$ jeweils für Si stehen, unter dem Fachmann bekannten üblichen Reaktionsbedingungen nicht hydrolytisch gespalten werden kann.

Der Ausdruck "$C_1$-$C_{10}$-aliphatischer Rest" umfasst im Sinne dieser Erfindung vorzugsweise acyclische gesättigte oder ungesättigte, vorzugsweise gesättigte, aliphatische Kohlenwasserstoffreste, d.h. $C_{1-10}$-aliphatische Reste, die jeweils verzweigt oder unverzweigt sowie unsubstituiert oder ein- oder mehrfach substituiert sein können, mit 1 bis 10 Kohlenstoffatomen, d.h. $C_{1-10}$-Alkanyle, $C_{2-10}$-Alkenyle und $C_{2-10}$-Alkinyle. Dabei weisen Alkenyle mindestens eine C-C-Doppelbindung und Alkinyle mindestens eine C-C-Dreifachbindung auf. Bevorzugt ist ein $C_1$-$C_{10}$-aliphatischer Rest aus der Gruppe ausgewählt, die Methyl, Ethyl, n-Propyl, 2-Propyl, n-Butyl, iso-Butyl, sec.-Butyl, tert.-Butyl, n-Pentyl, iso-Pentyl, neo-Pentyl, n-Hexyl, n-Heptyl, n-Octyl, n-Nonyl, und n-Decyl, umfasst.

Der Ausdruck "$C_1$-$C_{10}$-heteroaliphatischer Rest" umfasst im Sinne dieser Erfindung vorzugsweise $C_1$-$C_{10}$-aliphatische Reste, in denen wenigstens ein, gegebenenfalls auch 2 oder 3 Kohlenstoffatome durch ein Heteroatom wie N, O oder S oder eine Heteroatomgruppe wie NH, N($C_{1-10}$-aliphatischer Rest) oder N($C_{1-10}$-aliphatischer Rest)$_2$ ersetzt ist/sind.

Der Ausdruck "$C_{3-10}$-cyloaliphatischer Rest" umfasst im Sinne dieser Erfindung vorzugsweise cyclische aliphatische (cycloaliphatische) Kohlenwasserstoffe mit 3, 4, 5, 6, 7, 8, 9 oder 10 Kohlenstoffatomen, wobei die Kohlenwasserstoffe gesättigt oder ungesättigt (aber nicht aromatisch), unsubstituiert oder ein- oder mehrfach substituiert sein können. Die Bindung des $C_{3-10}$-cyloaliphatischen Restes an die jeweilige übergeordnete allgemeine Struktur kann über jedes beliebige und mögliche Ringglied des $C_{3-10}$-cyloaliphatischen Restes erfolgen, erfolgt jedoch vorzugsweise über ein Kohlenstoffatom. Die $C_{3-10}$-cyloaliphatischen Reste können weiterhin einfach oder mehrfach verbrückt sein wie bspw. im Fall von Adamantyl, Bicyclo[2.2.1]heptyl oder Bicyclo[2.2.2]octyl. Bevorzugt ist ein $C_{3-10}$-cyloaliphatischer Rest aus der Gruppe ausgewählt, die Cyclopropyl, Cyclobutyl, Cyclopentyl, Cyclohexyl, und Cycloheptyl umfasst.

Der Ausdruck "3-10- gliedriger heterocycloaliphatischer Rest" umfasst vorzugsweise aliphatische gesättigte oder ungesättigte (aber nicht aromatische) cycloaliphatische Reste mit drei bis zehn, d.h. 3, 4, 5, 6, 7, 8, 9 oder 10 Ringgliedern, in denen wenigstens ein, gegebenenfalls auch 2 oder 3 Kohlenstoffatome durch ein Heteroatom wie N, O oder S oder eine Heteroatomgruppe wie NH, N($C_{1-10}$-aliphatischer Rest) oder N($C_{1-10}$-aliphatischer Rest)$_2$ ersetzt ist/sind, wobei die Ringglieder unsubstituiert oder ein- oder mehrfach substituiert sein können. Die Bindung an die übergeordnete allgemeine Struktur kann über jedes beliebige und mögliche Ringglied des heterocycloaliphatischen Restes erfolgen, erfolgt jedoch vorzugsweise über ein Kohlenstoffatom. Bevorzugt sind 3-10- gliedrige heterocycloaliphatische Reste aus der Gruppe umfassend Azetidinyl, Aziridinyl, Azepanyl, Azocanyl, Diazepanyl, Dithiolanyl, Dihydrochinolinyl, Dihydropyrrolyl, Dioxanyl, Dioxolanyl, Dioxepanyl, Dihydroindenyl Dihydropyridinyl, Dihydrofuranyl, Dihydroisochinolinyl, Dihydroindolinyl, Dihydroisoindolyl, Imidazolidinyl, Isoxazolidinyl, Morpholinyl, Oxiranyl, Oxetanyl, Pyrrolidinyl, Piperazinyl, 4-Methylpiperazinyl, Piperidinyl, Pyrazolidinyl, Pyranyl, Tetrahydropyrrolyl, Tetrahydropyranyl, Tetrahydrochinolinyl, Tetrahydroisochinolinyl, Tetrahydroindolinyl, Tetrahydrofuranyl, Tetrahydropyridinyl, Tetrahydrothiophenyl, Tetrahydropyridoindolyl, Tetrahydronaphthyl, Tetrahydrocarbolinyl, Tetrahydroisoxazolopyridinyl, Thiazolidinyl und Thiomorpholinyl.

Der Begriff "Aryl" bedeutet im Sinne dieser Erfindung aromatische Kohlenwasserstoffe mit 6 bis 12 Ringgliedern, vorzugsweise 6 Ringgliedern, u.a. Phenyle und Naphthyle. Jeder Aryl-Rest kann unsubstituiert oder einfach oder mehrfach substituiert vorliegen, wobei die Aryl-Substituenten gleich oder verschieden und in jeder beliebigen und möglichen Position des Aryls sein können. Die Bindung des Aryls an die übergeordnete allgemeine Struktur kann über jedes beliebige und mögliche Ringglied des Aryl-Restes erfolgen. Bevorzugt ist Aryl aus der Gruppe ausgewählt, die Phenyl, 1-Naphthyl und 2-Naphthyl enthält.

Der Begriff "Heteroaryl" steht für einen 5- bis 12-gliedrigen, vorzugsweise 5- oder 6-gliedrigen cyclischen aromatischen Rest, der mindestens 1, ggf. auch 2, 3, 4 oder 5 Heteroatome, enthält, wobei die Heteroatome jeweils unabhängig voneinander ausgewählt sind aus der Gruppe S, N und O und der Heteroaryl-Rest unsubstituiert oder ein- oder mehrfach substituiert sein kann; im Falle der Substitution am Heteroaryl können die Substituenten gleich oder verschieden sein und in jeder beliebigen und möglichen Position des Heteroaryls sein. Die Bindung an die übergeordnete allgemeine Struktur kann über jedes beliebige und mögliche Ringglied des Heteroaryl-Restes erfolgen. Es ist bevorzugt, dass der Heteroaryl-Rest ausgewählt ist aus der Gruppe, die Benzofuranyl, Benzoimidazolyl, Benzothienyl, Benzothiadiazolyl, Benzothiazolyl, Benzotriazolyl, Benzooxazolyl, Benzooxadiazolyl, Chinazolinyl, Chinoxalinyl, Carbazolyl, Chinolinyl, Dibenzofuranyl, Dibenzothienyl, Furyl (Furanyl), Imidazolyl, Imidazothiazolyl, Indazolyl, Indolizinyl, Indolyl, Isochinolinyl, Isoxazoyl, Isothiazolyl, Indolyl, Naphthyridinyl, Oxazolyl, Oxadiazolyl, Phenazinyl, Phenothiazinyl, Phtalazinyl, Pyrazolyl, Pyridyl (2-Pyridyl, 3-Pyridyl, 4-Pyridyl), Pyrrolyl, Pyridazinyl, Pyrimidinyl, Pyrazinyl, Purinyl, Phenazinyl, Thienyl (Thiophenyl), Triazolyl, Tetrazolyl, Thiazolyl, Thiadiazolyl oder Triazinyl umfasst.

Der Ausdruck "über einen $C_{1-6}$-aliphatischen Rest gebundener $C_3$-$C_{10}$-cycloaliphatischer Rest, 3-10- gliedriger heterocycloaliphatischer Rest, 5-12 gliedriger Aryl- oder Heteroaryl-Rest" bedeutet vorzugsweise, dass die genannten Reste die oben definierten Bedeutungen haben und jeweils über einen $C_{1-6}$-aliphatischen Rest an die jeweilige übergeordnete allgemeine Struktur gebunden ist., der verzweigt oder unverzweigt, gesättigt oder ungesättigt unsubstituiert oder einfach oder mehrfach substituiert sein kann.

Wenn ein Rest oder eine Gruppe wie beispielsweise die Gruppe $X^1$ innerhalb der Verbindung (A1) oder ein nicht hydrolysierbarer organischer Rest wie die Reste $R^2$ und $R^3$ innerhalb der Verbindung (A2) mehrfach innerhalb eines Moleküls vorkommt, dann kann dieser Rest oder diese Gruppe jeweils gleiche oder unterschiedliche Bedeutungen haben: steht beispielsweise die Gruppe für $X^1$ für O-$R^a$, wobei $R^a$ für einen $C_{1-6}$-aliphatischen Rest steht, und kommt beispielsweise innerhalb des Moleküls $(M^1)^x(X^1)_a(R^1)$ insgesamt dreimal vor, so kann $X^1$ zum Beispiel dreimal jeweils für O-$C_2H_5$ stehen oder kann einmal für O-$C_2H_5$, einmal für O-$CH_3$ und einmal für O-$C_3H_6$ stehen. Stehen $R^2$ und $R^3$ innerhalb von (A2) jeweils für einen nicht hydrolysierbaren organischen Rest, so kann einer dieser Reste beispielsweise wenigstens eine reaktive funktionelle Gruppe aufweisen und der verbleibende Rest keine reaktive funktionelle Gruppe aufweisen.

Die Reste T, U, V und W stehen jeweils unabhängig voneinander für einen Rest, der 1 bis 30 Kohlenstoffatome aufweist und gegebenenfalls bis zu 10 Heteroatome und Heteroatomgruppen ausgewählt aus der Gruppe bestehend aus O, S und N aufweisen kann. Die Reste T, U, V und W können dabei aliphatisch, heteroaliphatisch, cycloaliphatisch, heterocycloaliphatisch, aromatisch oder heteroaromatisch sein, wobei auch teil(hetero)aromatische Reste möglich sind, d.h. (hetero)aromatisch Reste, die mit wenigstens einer aliphatisch, heteroaliphatischen, cycloaliphatischen, und/oder heterocycloaliphatischen Gruppe substituiert sind. Dem Fachmann ist klar, dass die Reste T, U, V und W bivalent oder trivalent sind und als verbrückende organische Gruppen zwischen zwei oder drei Metall- und/oder Halbmetallatomen fungieren. Steht beispielsweise $R^1$ für $(U)[(M^1)^x(X^1)_c]_2$ so ist U eine trivalente Gruppe, die einen Rest $(M^1)^x(X^1)_a$ mit zwei Resten $[(M^1)^x(X^1)_c]$ verbrückt.

Vorzugsweise haben alle Gruppen $X^1$ innerhalb der als Komponente (A1) eingesetzten Verbindung $(M^1)^x(X^1)_a(R^1)$ die gleiche Bedeutung, besonders bevorzugt stehen alle Gruppen $X^1$ innerhalb der als Komponente (A1) eingesetzten Verbindung $(M^1)^x(X^1)_a(R^1)$ für O-$R^a$, wobei $R^a$ vorzugsweise für einen $C_{1-6}$-aliphatischen Rest, insbesondere einen $C_{1-6}$-Alkyl-Rest, am meisten bevorzugt, worin $R^a$ für Methyl, Ethyl, n-Propyl, iso-Propyl, n-Butyl, iso-Butyl, oder tert-Butyl steht.

Vorzugsweise haben alle Gruppen $X^2$ innerhalb der als Komponente (A2) eingesetzten Verbindung die gleiche Bedeutung, besonders bevorzugt stehen alle Gruppen $X^2$ innerhalb der als Komponente (A2) eingesetzten Verbindung für O-$R^a$, wobei $R^a$ für einen $C_{1-6}$-aliphatischen Rest, insbesondere einen $C_{1-6}$-Alkyl-Rest, am meisten bevorzugt, worin $R^3$ für Methyl, Ethyl, n-Propyl, iso-Propyl, n-Butyl, iso-Butyl, oder tert-Butyl steht.

Vorzugsweise sind

$M^1$ und $M^2$ jeweils unabhängig voneinander ausgewählt sind aus der Gruppe bestehend aus Al, Ti, Zr, Fe, B und Si, besonders bevorzugt ausgewählt aus der Gruppe bestehend aus Al, Ti, Zr und Si, ganz besonders bevorzugt ausgewählt aus der Gruppe bestehend aus Ti, Zr und Si, insbesondere bevorzugt ausgewählt aus der Gruppe bestehend aus Zr und Si, am meisten bevorzugt bedeuten $M^1$ und $M^2$ jeweils Si,

oder $M^1$ ist ausgewählt aus der Gruppe bestehend aus Al, Ti, Zr, Fe, B und Si, besonders bevorzugt ausgewählt aus der Gruppe bestehend aus Al, Ti, Zr und Si, ganz besonders bevorzugt ausgewählt aus der Gruppe bestehend aus Ti, Zr und Si, insbesondere bevorzugt ausgewählt aus der Gruppe bestehend aus Zr und Si, am meisten bevorzugt Si, und $M^2$ steht für Si,

$X^1$ und $X^2$ stehen jeweils unabhängig voneinander für eine Alkoxy-Gruppe O-$R^a$, wobei $R^a$ jeweils für einen $C_{1-6}$-aliphatischen Rest, vorzugsweise für einen $C_{1-6}$-Alkyl-Rest, besonders bevorzugt, worin $R^3$ für Methyl, Ethyl, n-Propyl, iso-Propyl, n-Butyl, iso-Butyl, oder tert-Butyl steht.

Vorzugsweise ist in Schritt (2) des erfindungsgemäßen Verfahrens eingesetzte wässrige Sol-Gel-Zusammensetzung erhältlich durch Umsetzung

wenigstens einer Verbindung (A1) als wenigstens eine Ausgangsverbindung, in der $R^1$ für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, Thiol-Gruppen, Isocyanat-Gruppen, phosphorhaltigen Gruppen, und Gruppen, die eine ethylenisch ungesättige Doppelbindung aufweisen, aufweist,

und gegebenenfalls wenigstens einer weiteren Verbindung (A1), in der $R^1$ für $X^1$ steht,

und gegebenenfalls wenigstens einer weiteren Verbindung (A1), in der $R^1$ für einen nicht hydrolysierbaren organischen Rest steht, welcher keine reaktive funktionelle Gruppe aufweist,

und gegebenenfalls wenigstens einer Verbindung (A2).

Vorzugsweise die in Schritt (2) eingesetzte wässrige Sol-Gel-Zusammensetzung erhältlich durch Umsetzung wenigstens einer Verbindung $Si(X^1)_3(R^1)$ als wenigstens eine Verbindung (A1-1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

und gegebenenfalls wenigstens einer Verbindung $Si(X^1)_4$ als wenigstens eine weitere Verbindung (A1-2),

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen Rest steht, welcher keine reaktive funktionelle Gruppe aufweist.

und gegebenenfalls wenigstens einer Verbindung $Zr(X^1)_4$ als wenigstens eine weitere Verbindung (A1-4),

mit Wasser.

In einer besonders bevorzugten Ausführungsform ist die in Schritt (2) des erfindungsgemäßen Verfahrens eingesetzte wässrige Sol-Gel-Zusammensetzung erhältlich durch Umsetzung

wenigstens einer Verbindung $Si(X^1)_3(R^1)$ als wenigstens eine Verbindung (A1-1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, insbesondere wenigstens eine Epoxid-Gruppe, aufweist,

und wobei der nicht hydrolysierbare organische Rest vorzugsweise ausgewählt ist aus der Gruppe bestehend aus $C_1$-$C_{10}$-aliphatischen Resten und $C_1$-$C_{10}$-heteroaliphatischen Resten,

$X^1$ für $OR^a$ steht und $R^a$ für einen $C_{1-6}$-Alkyl-Rest steht,

und gegebenenfalls wenigstens einer Verbindung $Si(X^1)_4$ als wenigstens eine weitere Verbindung (A1-2), worin $X^1$ für $OR^a$ steht und $R^a$ für einen $C_{1-6}$-AlkylRest steht,

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen Rest steht, welcher keine reaktive funktionelle Gruppe aufweist,

und wobei der nicht hydrolysierbare organische Rest vorzugsweise ausgewählt ist aus der Gruppe bestehend aus $C_1$-$C_{10}$-aliphatischen Resten, $C_1$-$C_{10}$-heteroaliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-AlkylRest steht,

mit Wasser.

Besonders bevorzugt ist in Schritt (2) eingesetzte wässrige Sol-Gel-Zusammensetzung erhältlich durch Umsetzung

wenigstens einer Verbindung $Si(X^1)_3(R^1)$ als wenigstens eine Verbindung (A1-1),

wobei $R^1$ darin für einen nicht hydrolysierbaren $C_1$-$C_{10}$-aliphatischen organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

$X^1$ für $OR^a$ steht und $R^a$ für einen $C_{1-6}$-Alkyl-Rest steht,

und gegebenenfalls wenigstens einer Verbindung $Si(X^1)_4$ als wenigstens eine weitere Verbindung (A1-2),

worin $X^1$ für $OR^a$ steht und $R^a$ für einen $C_{1-6}$-Alkyl-Rest steht,

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen $C_1$-$C_{10}$-aliphatischen Rest steht, welcher keine reaktive funktionelle Gruppe aufweist,

und worin der nicht hydrolysierbare organische Rest $R^1$ vorzugsweise ausgewählt ist aus der Gruppe bestehend aus $C_1$-$C_{10}$-aliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-AlkylRest steht,

mit Wasser.

Werden zur Herstellung der erfindungsgemäß eingesetzten wässrigen Sol-Gel-Zusammensetzung wenigstens drei Ausgangsverbindungen eingesetzt wie beispielsweise drei voneinander verschiedene Verbindungen (A1), beispielsweise die vorstehend als (A1-1), (A1-2) und (A1-3) bezeichneten Verbindungen, so liegt das relative Gewichtsverhältnis der Komponenten (A1-1), (A1-2) und (A1-3) zueinander vorzugsweise in einem Bereich von 5:1:1 bis 1:1:5 oder von 5:1:1 bis 1:5:1 oder von 1:5:1 bis 5:1:1 oder von 1:5:1 bis 1:1:5 oder von 1:1:5 bis 5:1:1 oder von 1:1:5 bis 1:5:1.

Werden zur Herstellung der erfindungsgemäß eingesetzten wässrigen Sol-Gel-Zusammensetzung wenigstens vier Ausgangsverbindungen eingesetzt wie beispielsweise vier voneinander verschiedene Verbindungen (A1), beispielsweise die vorstehend als (A1-1), (A1-2), (A1-3) und (A1-4) bezeichneten Verbindungen, so liegt das relative Gewichtsverhältnis der Komponenten (A1-1), (A1-2) und (A1-3) sowie (A1-4) zueinander vorzugsweise in einem Bereich von 5:1:1:1 bis 1:1:1:5 oder von 5:1:1:1 bis 1:1:5:1 oder von 5:1:1:1 bis 1:5:1:1 oder von 1:5:1:1 bis 5:1:1:1 oder von 1:5:1:1 bis 1:1:5:1 oder von 1:5:1:1 bis 1:1:1:5 oder von 1:1:5:1 bis 5:1:1:1 oder von 1:1:5:1 bis 1:5:1:1 oder von 1:1:5:1 bis 1:1:1:5 oder von 1:1:1:5 bis 5:1:1:1 oder von 1:1:1:5 bis 1:5:1:1 oder von 1:1:1:5 bis 1:1:5:1.

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ die Bedeutung $X^1$ hat. Beispiele entsprechender Verbindungen sind Tetramethoxysilan (TMOS), Tetraethoxysilan (TEOS), Dimethoxydiethoxysilan, Tetrapropoxysilan, Tetraisopropoxysilan, Tetrabutoxysilan, Titantetraisopropoxid, Titantetrabutoxid, Zirkoniumtetraisopropoxid und Zirkoniumtetrabutoxid.

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ für einen nicht hydrolysierbaren organischen Rest steht, wobei der nicht hydrolysierbare organische Rest $R^1$ gegebenenfalls wenigstens eine reaktive funktionelle Gruppe aufweisen kann.

Weist der nicht hydrolysierbare organische Rest $R^1$ dabei wenigstens eine Gruppe auf, die eine Vinyl-Gruppe als ethylenisch ungesättigte Doppelbindung enthält, so eignen sich beispielsweise Vinyltrimethoxysilan (VTMS), Vinyltriethoxysilan, Vinyltriisopropoxysilan, Vinyltrichlorsilan, Vinyl-tris(2-methoxy-ethoxy)silan, Vinyltriacetoxysilan, p-Styryltrimethoxysilan, und/oder p-Styryltriethoxysilan als Komponente (A1).

Weist der nicht hydrolysierbare organische Rest $R^1$ dabei wenigstens eine Gruppe auf, die eine (Meth)acryl-Gruppe als ethylenisch ungesättigte Doppelbindung enthält, so eignen sich beispielsweise γ-(Meth)acryloxypropyltrimethoxysilan (MAPTS), γ-(Meth)acryloxypropyltriethoxysilan, γ-(Meth)acryloxypropyltriisopropoxysilan, β-(Meth)acryloxyethyltrimethoxysilan, β-(Meth)acryloxyethyltriethoxysilan, β-(Meth)acryloxyethyltriisopropoxysilan, 3-(Meth)acryloxypropyltriacetoxysilan, (Meth)acrylamidopropyltriethoxysilan, (Meth)acrylamidopropyltrimethoxysilan, (Meth)acrylamidopropyldimethoxyethoxysilan und/oder (Meth)acrylamidopropylmethoxydiethoxysilan als Komponente (A1).

Weist der nicht hydrolysierbare organische Rest $R^1$ dabei wenigstens eine Gruppe auf, die eine Isocyanat-Gruppe enthält, so eignen sich beispielsweise γ-Isocyanatopropyltriethoxysilan und/oder γ-Isocyanatopropyltrimethoxysilan als Komponente (A1).

Weist der nicht hydrolysierbare organische Rest $R^1$ dabei wenigstens eine Gruppe auf, die wenigstens eine primäre und/oder sekundäre Amino-Gruppe enthält, so eignen sich beispielsweise 3-Aminopropyltrimethoxysilan (APS), 3-Aminopropyltriethoxysilan, 3-Aminopropyltriisopropoxysilan, 2-Aminoethyltrimethoxysilan, 2-Aminoethyltriethoxy-silan, 2-Aminoethyltriisopropoxysilan, Aminomethyltrimethoxysilan, Aminomethyltriethoxysilan, Aminomethyltriisopropoxysilan, 3-(2-Aminoethyl)aminopropyltrimethoxysilan (AEAPS), 3-(2-Aminoethyl)aminopropyltriethoxysilan, 3-(2-Aminoethyl)aminopropyltriisopropoxysilan, 2-(2-Aminoethyl)aminoethyltrimethoxysilan, 2-(2-Aminoethyl)aminoethyltriethoxysilan 2-(2-Aminoethyl)aminoethyltriisopropoxysilan, 3-(3-Aminopropyl)aminopropyltrimethoxysilan, 3-(3-Aminopropyl)aminopropyltriethoxysilan, 3-(3-Aminopropyl)aminopropyltriisopropoxysilan, Diethylentriaminopropyltrimethoxysilan, Diethylentriaminopropyltriethoxysilan, N-(n-Butyl)-3-aminopropyltrimethoxysilan, N-(n-Butyl)-3-aminopropyltriethoxysilan, N-Cylohexylaminomethyltriethoxysilan, N-Cylohexylaminomethyltrimethoxysilan, N-Ethyl-γ-aminoisobutyltrimethoxysilan, N-Ethyl-γ-aminoisobutyltriethoxysilan, N-(Vinylbenzyl)-2-aminoethyl-3-aminopropyltrimethoxysilan-Hydrochlorid, N-Phenyl-γ-aminopropyltrimethoxysilan, N-Phenyl-γ-aminopropyltriethoxysilan, γ-Ureidopropyltrimethoxysilan, γ-Ureidopropyltriethoxysilan, N-Methyl-[3-(trimethoxysilyl)propyl]carbamat, und/oder N-Trimethoxysilylmethyl-O-methylcarbamat als Komponente (A1).

Weist der nicht hydrolysierbare organische Rest $R^1$ dabei wenigstens eine Gruppe auf, die wenigstens eine Epoxid-Gruppe enthält, so eignen sich beispielsweise 3-Glycidoxypropyltrimethoxysilan (GPTMS), 3-Glycidoxypropyltriethoxysilan, 3-Glycidoxypropyltriisopropoxyoxysilan, 2-Glycidoxyethyltrimethoxysilan, 2-Glycidoxyethyltriethoxysilan, 2-Glycidoxyethyltriisopropoxyoxysilan, β-(3,4-Epoxycyclohexyl)-ethyltrimethoxysilan, und/oder β-(3,4-Epoxycyclohexyl)-ethyltriethoxysilan als Komponente (A1).

Weist der nicht hydrolysierbare organische Rest $R^1$ dabei wenigstens eine Gruppe auf, die wenigstens eine Thiol-Gruppe enthält, so eignen sich beispielsweise 3-Mercaptopropyltrimethoxysilan (MPTMS), 3-Mercaptopropyltriethoxysilan, 3-Mercaptopropyltriisopropoxysilan, 2-Mercaptoethyltrimethoxysilan, 2-Mercaptoethyltriethoxysilan und/oder 2-Mercaptoethyltriisopropoxysilan als Komponente (A1).

Weist der nicht hydrolysierbare organische Rest $R^1$ dabei wenigstens eine Gruppe auf, die phosphorhaltig ist, so eignen sich beispielsweise Dimethylphosphonatoethyltrimethoxysilan, Dimethylphosphonatoethyltriethoxysilan (PHS), Dimethylphosphonatoethyltriisopropoxysilan, Diethylphosphonatoethyltrimethoxysilan, Diethylphosphonatoethyltriethoxysilan (PHS und/oder Diethylphosphonatoethyltriisopropoxysilan als Komponente (A1).

Zur Herstellung der in Schritt (2) des erfindungsgemäßen Verfahrens eingesetzten wässrigen Sol-Gel-Zusammensetzung eignet sich zudem wenigstens eine Verbindung $(M^1)^x(X^1)_a(R^1)$ als Komponente (A1), in der $R^1$ für einen nicht hydrolysierbaren organischen Rest steht, wobei der nicht hydrolysierbare organische Rest $R^1$ keine reaktive funktionelle Gruppe aufweisen kann.

Weist der nicht hydrolysierbare organische Rest $R^1$ dabei keine reaktive funktionelle Gruppe auf, so eignen sich beispielsweise Methyltrimethoxysilan (MTMS), Methyltriethoxysilan (MTES), Methyltripropopxysilan, Methyltriisopropoxysilan, Ethyltrimethoxysilan, Ethyltriethoxysilan, Ethyltripropopxysilan, Ethyltriisopropoxysilan, Octyltrimethoxysilan, Isobutyltriethoxysilan, Isobutyltrimethoxysilan, Octyltriethoxysilan, Hexyltrimethoxysilan, Hexyltriethoxysilan, Decyltrimethoxysilan, Decyltriethoxysilan, Hexaecyltrimethoxysilan, Hexadecyltriethoxysilan, Isooctyltrimethoxysilan, Isooctyltriethoxysilan, Phenyltrimethoxysilan (PHS), Phenyltriethoxysilan, Phenyltripropoxysilan, Phenyltriisopropoxysilan, Benzyltrimethoxysilan, Benzyltriethoxysilan, Benzyltripropoxysilan, Benzyltriisopropoxysilan, Octyltrichlorsilan, Tridecafluorooctyltriethoxysilan, Tridecafluorooctyltrimethoxysilan, 3-Octanoylthio-1-propyltriethoxysilan, 3-Octanoylthio-1-propyltrimethoxysilan, 3-Triethoxysily-N-(1,3-Dimethylbutylidenpropylamin, 3-Chlorpropyltrimethoxysilan und/oder 3-Chlorpropyltriethoxysilan als Komponente (A1).

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ für (T)$(M^1)^x(X^1)_c$ steht. Beispielsweise eignen sich hier Bis(trimethoxysilyl)ethan, Bis(triethoxysilyl)ethan, Bis-[γ-(triethoxysilyl)propyl]amin, Bis-[γ-(trimethoxysilyl)propyl]amin, Bis(triethoxysilyl-propyl)tetrasulfid und/oder Bis(trimethoxysilylpropyl)tetrasulfid,

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ für (U)$[(M^1)^x(X^1)_c]_2$ steht. Beispielsweise eignet sich hier Tris-[3-(trimethoxysilyl)propyl]isocyanurat.

Zur Herstellung der in Schritt (2) des erfindungsgemäßen Verfahrens eingesetzten wässrigen Sol-Gel-Zusammensetzung eignet sich beispielsweise wenigstens eine Verbindung $(M^2)^y(X^2)_b(R^2)(R^3)$ als Komponente (A2), in der $R^2$ und $R^3$ unabhängig voneinander jeweils für einen nicht hydrolysierbaren organischen Rest stehen. Beispielsweise eignet sich hier 3-Glycidoxypropylmethyldiethoxysilan, 3-Glycidoxypropylmethyldimethoxysilan, γ-(Meth)acryloxypropylmethyldimethoxysilan, 3-Mercaptopropylmethyldimethoxysilan, 3-Mercaptopropylmethyldiethoxysilan, γ-(Meth)acryloxypropylmethyldiethoxysilan, N-(2-aminoethyl)-3-aminopropylmethyldimethoxysilan, N-(2-aminoethyl)-3-aminopropylmethyldiethoxysilan, 3-Aminopropylmethyldiethoxysilan, 3-Aminopropylmethyldimethoxysilan, Dimethyldimethoxysilan, Dimethyldiethoxysilan, Di-tert.-butoxydiacetoxysilan, Vinyldimethoxymethylsilan, Vinyldiethoxymethylsilan, N-Cyclohexylaminomethylmethyldiethoxysilan, N-Cyclohexylaminomethylmethyldimethoxysilan, (Cyclohexyl)methyldimethoxysilan, Dicyclopentyldimethoxysilan und/oder N-Dimethoxy(methyl)silylmethyl-O-methylcarbamat.

In einer bevorzugten Ausführungsform des erfindungsgemäßen Verfahrens liegt der Festkörpergehalt der in Schritt (2) eingesetzten wässrigen Zusammensetzung nach vollständiger Hydrolyse und Kondensation der wenigstens einen Ausgangsverbindung in einem Bereich von 0,01 bis zu 10 Gew.-%, besonders bevorzugt in einem Bereich von 0,05 bis zu 7,5 Gew.-%, ganz besonders bevorzugt in einem Bereich von 0,1 bis zu 5 Gew.-%, insbesondere in einem Bereich von 0,2 bis zu 2 Gew.-% oder in einem Bereich von 0,2 bis zu 1 Gew.-%, jeweils bezogen auf das Gesamtgewicht der wässrigen Zusammensetzung.

Der Festkörpergehalt der erfindungsgemäß eingesetzten wässrigen Sol-Gel-Zusammensetzung kann dabei aus der Menge der zur Herstellung der Sol-Gel-Zusammensetzung eingesetzten wenigstens einen Ausgangsverbindung mittels Berechnung bestimmt werden. Dabei wird eine vollständige Hydrolyse der in der wenigstens einen Ausgangsverbindung enthaltenen hydrolysierbaren Gruppen wie beispielsweise der hydrolysierbaren Gruppen $X^1$ und zudem eine vollständige Kondensation sämtlicher durch eine solche vollständige Hydrolyse gebildeter Metall-OH und/oder Halbmetall-OH-Bindungen wie beispielsweise $M^1$-OH Bindungen angenommen. Zur Berechnung des Festkörpergehalts der erfindungsgemäß eingesetzten wässrigen Sol-Gel-Zusammensetzung werden dabei alle gegebenenfalls vorhandenen Einfachbindungen, die zwischen einer nicht hydrolysierbaren Gruppe wie einem nicht hydrolysierbaren organischen Rest wie $R^1$, und einem Metallatom oder Halbmetallatom wie $M^1$ ausgebildet sind, als zum Festkörpergehalt dazugehörend betrachtet und entsprechend mitgezählt. Vorzugsweise wird der Festkörpergehalt der erfindungsgemäß eingesetzten wässrigen Sol-Gel-Zusammensetzung mittels dieser Berechnungsmethode bestimmt, d.h. bei dem im Zusammenhang mit der erfindungsgemäß eingesetzten wässrigen Sol-Gel-Zusammensetzung angegebenen Festkörpergehalt handelt es sich vorzugsweise um den theoretisch berechneten Festkörpergehalt dieser Zusammensetzung. Der theoretisch berechnete Festkörpergehalt lässt sich dabei für jede der wenigstens einen Ausgangsverbindung, die zur Herstellung der erfindungsgemäß eingesetzten wässrigen Sol-Gel-Zusammensetzung eingesetzt worden ist, nach der allgemeinen Formel

$$FK_{theo} = \frac{M_{kond}}{M_{start}} \cdot Anteil_{Rezept}$$

berechnen, worin

FK$_{theo}$ = theoretisch berechneter Festkörpergehalt in Gew.-%
M$_{kond}$ = molare Masse der vollständig kondensierten Ausgangsverbindung in g/mol
M$_{start}$ = molare Masse der Ausgangsverbindung in g/mol und
Anteil$_{Rezept}$ = Anteil der Ausgangsverbindung in der Zusammensetzung in Gew.-%.

Eine Beispielberechnung zur Bestimmung des theoretisch berechneten Festkörpergehalts einer erfindungsgemäß eingesetzten wässrigen Sol-Gel-Zusammensetzung findet sich im experimentellen Teil (Beispiele und Vergleichsbeispiele) unter Punkt **1**.

Der so theoretisch berechnete Festkörpergehalt ist in Einklang mit einem nach einer experimentellen Bestimmungsmethode ermittelten Festkörpergehhalt. Diese experimentelle Bestimmungsmethode sieht vor, dass die erfindungsgemäß eingesetzte wässrigen Sol-Gel-Zusammensetzung über eine Dauer von 60 Minuten bei einer Temperatur von 130°C gemäß DIN EN ISO 3251 eingetrocknet wird. Dabei wird die hergestellte erfindungsgemäß eingesetzte wässrige Sol-Gel-Zusammensetzung in einer Menge von 2 ± 0,2 g eingewogen und dann gemäß DIN EN ISO 3251 eingetrocknet.

Werden zur Herstellung der erfindungsgemäß eingesetzten wässrigen Sol-Gel-Zusammensetzung wenigstens zwei Ausgangsverbindungen eingesetzt wie beispielsweise zwei voneinander verschiedene Verbindungen (A1) - nachfolgend als (A1a) und (A1b) bezeichnet - so liegt das relative Gewichtsverhältnis dieser beiden Komponenten wie beispielsweise (A1a) und (A1b) zueinander in einem Bereich von 10:1 bis 1:10, besonders bevorzugt in einem Bereich von 7,5:1 bis 1:7,5, ganz besonders bevorzugt in einem Bereich von 5:1 bis 1:5, insbesondere in einem Bereich von 2:1 bis 1:2.

Werden zur Herstellung der erfindungsgemäß eingesetzten wässrigen Sol-Gel-Zusammensetzung wenigstens drei Ausgangsverbindungen eingesetzt wie beispielsweise drei voneinander verschiedene Verbindungen (A1) - nachfolgend als (A1a), (A1b) und (A1c) bezeichnet - so liegt das relative Gewichtsverhältnis der Komponenten (A1a) und (A1c) zueinander in einem Bereich von 10:1 bis 1:10, besonders bevorzugt in einem Bereich von 7,5:1:1 bis 1:7,5, ganz besonders bevorzugt in einem Bereich von 5:1 bis 1:5, insbesondere in einem Bereich von 2:1 bis 1:2.

Besonders bevorzugt liegt dass das relative Gewichtsverhältnis der Komponente (A1a) zur Komponente (A1b) zur Komponente (A1c) in einem Bereich von 2±0,2:1±0,2:1±0,2 zu 1±0,2:1±0,2:1±0,2 oder von 1±0,2:2±0,2:1±0,2 zu 1±0,2:1±0,2:1±0,2 oder von 1±0,2:1±0,2:2±0,2 zu 1±0,2:1±0,2:1±0,2.

Gegebenenfalls kann die wässrige Sol-Gel-Zusammensetzung wenigstens ein weiteres Additiv enthalten, welches vorzugsweise ausgewählt ist aus der Gruppe bestehend aus hydrolytisch und pyrolytisch hergestellter Kieselsäure, organischen und anorganischen Nanopartikeln, welche jeweils vorzugsweise eine Teilchengröße im Bereich von 1 bis 150 nm aufweisen, welche mittels dynamischer Lichtstreuung gemäß DIN ISO 13 321 bestimmbar ist, wasserlöslichen oder wasserdispergierbaren organischen Polymeren, oberflächen-aktive Verbindungen wie Tenside, Emulgatoren, Antioxidantien, Benetzungsmitteln, Dispergiermitteln, Verlaufshilfsmitteln, Löslichkeitsvermittlern, Entschäumungsmitteln, Stabilisierungsmitteln, vorzugsweise Hitze-Stabilisatoren, Prozess-Stabilisatoren und UV- und/oder Licht-Stabilisatoren, Katalysatoren, Wachsen, Flexibilisierungsmitteln, Flammschutzmitteln, Reaktivverdünnern, Trägermedien, Harzen, Haftvermittlern, Prozesshilfsmitteln, Weichmachern, pulver- und faserförmige Feststoffen, vorzugsweise pulver- und faserförmige Feststoffe ausgewählt aus der Gruppe bestehend aus Füllstoffen, Glasfasern, und Verstärkern, und Gemischen aus den vorstehend genannten Additiven. Der Additiv-Gehalt in der erfindungsgemäß eingesetzten wässrigen Sol-Gel-Zusammensetzung kann dabei je nach Verwendungszweck sehr breit variieren. Vorzugsweise liegt der Gehalt, jeweils bezogen auf das Gesamtgewicht der erfindungsgemäß eingesetzten wässrigen Sol-Gel-Zusammensetzung bei 0,1 bis 10,0 Gew.-%, bevorzugt bei 0,1 bis 8,0 Gew.-%, besonders bevorzugt bei 0,1 bis 6,0 Gew.-%, ganz besonders bevorzugt bei 0,1 bis 4,0 Gew.-% und insbesondere bei 0,1 bis 2,0 Gew.-%, und Mischungen davon.

Vorzugsweise addieren sich die Anteile in Gew.-% aller in der erfindungsgemäß eingesetzten wässrigen Sol-Gel-Zusammensetzung enthaltenen Komponenten und Additive auf insgesamt 100 Gew.-%, bezogen auf das Gesamtgewicht der Zusammensetzung.

Der Begriff "umfassend" bzw. "enthaltend" im Sinne der vorliegenden Erfindung, wie beispielsweise im Zusammenhang mit der erfindungsgemäß eingesetzten wässrigen Sol-Gel-Zusammensetzung hat in einer bevorzugten Ausführungsform die Bedeutung "bestehend aus". Dabei können hinsichtlich der erfindungsgemäß eingesetzten wässrigen Sol-Gel-Zusammensetzung in dieser bevorzugten Ausführungsform eine oder mehrere der weiteren vorstehend genannten optional in der Zusammensetzung enthaltenen Komponenten in der Zusammensetzung enthalten sein. Alle Komponenten können dabei jeweils in ihren bevorzugten Ausführungsformen in der Zusammensetzung enthalten sein.

**Schritt (2a)**

In einer bevorzugten Ausführungsform umfasst das erfindungsgemäße Verfahren ferner einen Schritt (2a), der vorzugsweise auf den Schritt (2) folgt, aber noch vor einem optionalen Schritt (3) durchgeführt wird, nämlich eine

(2a) Spülung des nach Schritt (2) erhältlichen mit der wässrigen Sol-Gel-Zusammensetzung kontaktierten und dem Tauchlack zumindest teilweise beschichteten Substrats mit Wasser und/oder Ultrafiltrat.

**Schritt (2b)**

In einer bevorzugten Ausführungsform umfasst das erfindungsgemäße Verfahren ferner wenigstens einen Schritt (2b), der vorzugsweise auf den Schritt (2a) und/oder (2) folgt, aber vorzugsweise noch vor einem optionalen Schritt (3) durchgeführt wird, nämlich das

(2b) Aufbringen wenigstens einer weiteren Lackschicht auf das nach Schritt (2) oder nach Schritt (2) und (2a) erhältliche mit der wässrigen Sol-Gel-Zusammensetzung kontaktierte und mit dem Tauchlack zumindest teilweise beschichtete Substrat.

Mittels des Schrittes (2b) können ein oder mehrere weitere Lackschichten auf das nach Schritt (2) oder nach Schritt (2) und (2a) erhältliche mit der wässrigen Sol-Gel-Zusammensetzung kontaktierte und mit dem Tauchlack zumindest teilweise beschichtete Substrat aufgebracht werden, wobei die ein oder mehrere weitere Lackschicht auf den gemäß Schritt (2) behandelten Tauchlack aufgebracht wird. Sollen mehrere Schichten aufgebracht werden, kann Schritt (2b) entsprechend oft wiederholt werden. Beispiele weiterer aufzubringender Lackschichten sind beispielsweise Füllerschichten und/oder ein-oder mehrschichtige Decklackschichten. Dabei kann der Elektrotauchlack nach der Kontaktierung gemäß Schritt (2) und einer optionalen Spülung mit Wasser und/oder Ultrafiltrat (gemäß Schritt (2a)) gehärtet werden, wobei diese Härtung wie nachfolgend beschrieben gemäß einem Schritt (3) erfolgt, bevor eine weitere Schicht wie eine Füllerschicht und/oder eine ein- oder mehrschichtige Decklackschicht aufgebracht wird. Alternativ kann aber der Elektrotauchlack nach der Kontaktierung gemäß Schritt (2) und einer optionalen Spülung mit Wasser und/oder Ultrafiltrat gemäß Schritt (2a) nicht gehärtet werden, sondern zunächst eine weitere Schicht wie eine Füllerschicht und/oder eine ein- oder mehrschichtige Decklackschicht aufgebracht werden ("Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben gemäß einem Schritt (3) erfolgt.

**Schritt (3)**

In einer bevorzugten Ausführungsform umfasst das erfindungsgemäße Verfahren ferner wenigstens einen Schritt (3), der vorzugsweise auf den Schritt (2) oder auf die Schritte (2) und (2a), sowie jeweils gegebenenfalls (2b) folgt, nämlich eine

(3) Aushärtung der nach Schritt (2) oder nach Schritt (2) und (2a) sowie jeweils gegebenenfalls nach wenigstens einem Schritt (2b) erhaltenen zumindest teilweisen Beschichtung auf dem Substrat.

Schritt (3) des erfindungsgemäßen Verfahrens wird vorzugsweise mittels Einbrennen nach Schritt (2) und gegebenenfalls nach wenigstens einem weiteren Schritt (2a) und/oder (2b) durchgeführt. Schritt (3) erfolgt vorzugsweise in einem Ofen. Die Aushärtung erfolgt dabei vorzugsweise bei einer Ofentemperatur im Bereich von 140°C bis 200°C, besonders bevorzugt in einem Bereich von 150°C bis 190°C, ganz besonders bevorzugt in einem Bereich von 160°C bis 180°C.

Die vorliegende Erfindung betrifft zudem ein gemäß dem erfindungsmäßen Verfahren erhältliches zumindest teilweise beschichtetes elektrisch leitfähiges Substrat wie ein zumindest teilweise beschichtetes Metallband oder ein zumindest teilweise beschichtetes metallisches Bauteil. Solche Bauteilen können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

Die vorliegende Erfindung betrifft zudem ein aus wenigstens einem elektrisch leitfähigen zumindest teilweise beschichteten Substrat, welches gemäß dem erfindungsmäßen Verfahren erhältlich ist, hergestelltes Bauteil, vorzugsweise ein metallisches Bauteil.

Bauteile, die mit dem erfindungsgemäßen Verfahren hergestellt werden, weisen vorzugsweise an der Obergrenze der elektrophoretisch zumindest teilweise aufgebrachten Tauchlackschicht einen Bereich auf, in dem in der eingesetzten wässrigen Sol-Gel-Zusammensetzung enthaltene Metall- und/oder Halbmetallatome angereichert sind, welche auf der Fläche und/oder im Querschnitt mit Energiedisperser-Röntgenspektroskopie (EDX) oder auf der Fläche mit Röntgenphotoelektronen-Spektroskopie (XPS) nachgewiesen werden können.

Ein weiterer Aspekt der vorliegenden Erfindung ist eine Verwendung einer wässrigen Sol-Gel-Zusammensetzung zur Nachbehandlung einer durch eine zumindest teilweise elektrophoretische Abscheidung zumindest teilweise auf ein elektrisch leitfähiges Substrat aufgebrachten Tauchlackschicht durch Kontaktierung der Tauchlackschicht mit der wässrigen Sol-Gel-Zusammensetzung, wobei die wässrige Sol-Gel-Zusammensetzung erhältlich ist durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser.

Alle im Zusammenhang mit dem Einsatz der in Schritt (2) des erfindungsgemäßen Verfahrens eingesetzten wässrigen Sol-Gel-Zusammensetzung hierin zuvor beschriebene bevorzugte Ausführungsformen sind auch bevorzugte Ausführungsformen des wässrigen Sol-Gel-Zusammensetzung hinsichtlich ihrer Verwendung zur Nachbehandlung einer durch eine zumindest teilweise elektrophoretische Abscheidung zumindest teilweise auf ein elektrisch leitfähiges Substrat aufgebrachten Tauchlackschicht durch Kontaktierung der Tauchlackschicht mit der wässrigen Sol-Gel-Zusammensetzung. Vorzugsweise erfolgt die erfindungsgemäße Verwendung dabei vor einer Aushärtung des elektrophoretisch abgeschiedenen Tauchlacks.

Bestimmungsmethoden

**1**. *Gitterschnittprüfung gemäß DIN EN ISO 2409*

Die Gitterschnittprüfung dient der Ermittlung der Haftfestigkeit einer Beschichtung auf einem Substrat. Die Gitterschnittprüfung wird gemäß DIN EN ISO 2409 für die mit dem erfindungsgemäßen Verfahren oder mit einem Vergleichsverfahren beschichteten elektrisch leitfähigen Substrate kaltgewalzter Stahl (CRS) und tauchverzinkter Stahl (HDG) durchgeführt. Die Gitterschnittprüfung wird dabei jeweils vor und nach einer Kondenswasser-Konstantklima-Prüfung gemäß DIN EN ISO 6270-2 durchgeführt. Die zu untersuchenden Proben werden dabei in einem Kondenswasser-Konstantklima-Prüfraum kontinuierlich (CH) über eine Dauer von 240 Stunden einer Atmosphäre mit 40°C und 100 % Luftfeuchte ausgesetzt. Die Beurteilung erfolgt anhand von Gitterschnitt-Kennwerten im Bereich von 0 (sehr gute Haftfestigkeit) bis 5 (sehr schlechte Haftfestigkeit).

**2**. *Kupferbeschleunigte Essigsäure-Salzsprühnebelprüfung gemäß DIN EN ISO 9227 CASS*

Die kupferbeschleunigte Essigsäure-Salzsprühnebelprüfung dient der Ermittlung der Korrosionsbeständigkeit einer Beschichtung auf einem Substrat. Die kupferbeschleunigte Essigsäure-Salzsprühnebelprüfung wird gemäß DIN EN ISO 9227 CASS für das mit dem erfindungsgemäßen Verfahren oder mit einem Vergleichsverfahren beschichtete elektrisch leitfähige Substrat Aluminium (AA6014 (ALU)) durchgeführt. Die zu untersuchenden Proben werden dabei in einer Kammer, in der bei einer Temperatur von 50 °C kontinuierlich über eine Dauer von 240 Stunden eine 5%ige Kochsalzlösung mit kontrolliertem pH-Wert vernebelt wird, wobei der Salzlösung Kupferchlorid und Essigsäure zugegeben wird. Der Nebel schlägt sich auf den zu untersuchenden Proben nieder und überzieht diese mit einem korrosiv wirkenden Salzwasserfilm.

Nach Durchführung der kupferbeschleunigten Essigsäure-Salzsprühnebelprüfung gemäß DIN EN ISO 9227 CASS werden die Proben zur Beurteilung ihres Rostgrades gemäß DIN EN ISO 4628-3 untersucht. Die Beurteilung erfolgt anhand von Kennwerten im Bereich von 0 (kein Rost) bis 5 (sehr hoher Rostgrad).

Wird die Beschichtung der zu untersuchenden Proben noch vor der kupferbeschleunigten Essigsäure-Salzsprühnebelprüfung gemäß DIN EN ISO 9227 CASS mit einem Messerschnitt bis zum Substrat eingeritzt, so können die Proben hinsichtlich ihres Unterwanderungsgrades gemäß DIN EN ISO 4628-8 untersucht werden, da das Substrat während der kupferbeschleunigten Essigsäure-Salzsprühnebelprüfung gemäß DIN EN ISO 9227 CASS entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

**3**. *Klimawechseltest*

Dieser Klimawechseltest dient der Ermittlung der Korrosionsbeständigkeit einer Beschichtung auf einem Substrat. Der Klimawechseltest wird für das mit dem erfindungsgemäßen Verfahren oder mit einem Vergleichsverfahren beschichtete elektrisch leitfähige Substrat tauchverzinkter Stahl (HDG) durchgeführt. Der Klimawechseltest wird dabei in 30 sogenannten Zyklen durchgeführt. Ein Zyklus (24 Stunden) besteht dabei aus 4 Stunden einer Salzsprühnebelprüfung gemäß DIN EN ISO 9227, 4 Stunden Lagerung bei Normalklima gemäß DIN 50014-23/50-2 einschließlich Abkühlphase und 16 Stunden einer Feucht-Wärme-Lagerung bei einem Klima nach DIN EN ISO 6270-2 bei 40±3°C und einer Luftfeuchtigkeit von 100%. Nach 5 Zyklen erfolgt jeweils eine Ruhepause von 48 Stunden bei Normalklima nach DIN 50014-23/50-2. 30 Zyklen entsprechen somit einer Dauer von insgesamt 42 Tagen.

Jeweils vor und jeweils nach Durchführung der 30 Zyklen des Klimawechseltests werden die beschichteten Substrate einem Steinschlagtest gemäß DIN EN ISO 20567-1 ausgesetzt, wobei der Test jeweils immer auf einer bestimmten Position der Fläche des Substrats durchgeführt wird. Die Beurteilung erfolgt anhand von Kennwerten im Bereich von 0 (bester Wert) bis 5 (schlechtester Wert).

Wird die Beschichtung der zu untersuchenden Proben noch vor der Durchführung des Klimawechseltests mit einem Messerschnitt bis zum Substrat eingeritzt, so können die Proben hinsichtlich ihres Unterwanderungsgrades gemäß DIN EN ISO 4628-8 untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

Die nachfolgenden Beispiele dienen der Erläuterung der Erfindung, sind jedoch nicht einschränkend auszulegen.

Sofern nicht anders angeführt, handelt es sich bei den in Prozenten jeweils um Gewichtsprozente.

**Beispiele und Vergleichsbeispiele**

**1.** Herstellung von erfindungsgemäß eingesetzten wässrigen Sol-Gel-Zusammensetzungen

*Wässrige Sol-Gel-Zusammensetzung S1*

Eine Mischung aus 9,3 g Tetraethoxysilan (TEOS), 9,3 g Methyltriethoxysilan (MTEOS) und 9,3 g 3-Glycidylpropyltrimethoxysilan (GLYMO) wird unter Rühren mit 2572,1 g deionisiertem Wasser, welches zuvor mit Phosphorsäure auf einen pH Wert von 4,0 eingestellt wird, versetzt. Die erhaltene Lösung wird für mindestens 72 h bei 21 °C gerührt.

*Wässrige Sol-Gel-Zusammensetzung S2*

Eine Mischung aus 8,5 g Tetraethoxysilan (TEOS), 8,5 g Methyltriethoxysilan (MTEOS) und 8,5 g 3-Glycidylpropyltrimethoxysilan (GLYMO) wird unter Rühren mit 26 g Ethanol sowie 2,0 g Zirkoniumtetrabutoxid (80 % in Butanol) versetzt. Nach 15 Minuten Rühren werden 720 g deionisiertes Wasser, welches zuvor mit Phosphorsäure auf einen pH Wert von 4,0 eingestellt wird, mittels Schlauchpumpe (Pumpgeschwindigkeit von 0,5 mL/min) zu dieser Mischung gegeben. Im Anschluss wird die Mischung mit 1826,5 g deionisiertem Wasser, welches zuvor mit Phosphorsäure auf einen pH Wert von 4,0 eingestellt wird, versetzt. Die erhaltene Lösung wird für mindestens 72 h bei 21 °C gerührt.

Tabelle 1 gibt einen Überblick über die wässrigen Sol-Gel-Zusammensetzungen S1 und S2.

Tabelle 1.

| Sol-Gel Formulierung | S1 | S2 |
|---|---|---|
| TEOS / Gew.-% | 0,358 | 0,327 |
| MTEOS / Gew.-% | 0,358 | 0,327 |
| GLYMO / Gew.-% | 0,358 | 0,327 |
| Zirkoniumtetrabutoxid (80%ig in Butanol) / Gew.-% | - | 0,077 |
| Deionisiertes Wasser (mit Phosphorsäure auf pH = 4,0 eingestellt) / Gew.-% | 98,926 | 97,942 |
| Ethanol / Gew.-% | - | 1,0 |
| Festkörpergehalt (berechnet) / Gew.-% | 0,518 | 0,499 |

Die Gew.-%-Angaben beziehen sich jeweils auf das Gesamtgewicht der wässrigen Sol-Gel-Zusammensetzung.

Wie aus Tabelle 1 hervorgeht, weist die wässrige Sol-Gel-Zusammensetzung S1 einen berechneten Festkörpergehalt von 0,518 Gew.-%, bezogen auf das Gesamtgewicht der Zusammensetzung, auf. Dieser Festkörpergehalt ist im Fall von S1 dabei die Summe der berechneten Festkörpergehalte der einzelnen eingesetzten Komponenten TEOS, MTEOS und GLYMO.

Beispielhaft wird im Folgenden der theoretisch berechnete Festkörpergehalt von TEOS (Summenformel $C_8H_{20}O_4Si$) innerhalb S1 bestimmt. Dieser wird mittels der allgemeinen Formel

$$FK_{theo} = \frac{M_{kond}}{M_{start}} \cdot Anteil_{Rezept}$$

berechnet, worin

FK$_{theo}$ = theoretisch berechneter Festkörpergehalt von TEOS in S1 in Gew.-%

M$_{kond}$ = 60,05 g/mol (molare Masse von TEOS in vollständig kondensierter Form; entspricht einer Summenformel von O(4/2)Si)

M$_{start}$ = 208,33 g/mol (molare Masse von TEOS)

Anteil$_{Rezept}$ = 0,358 Gew.-% (Anteil von TEOS in der Zusammensetzung in Gew.-%).

Es ergibt sich ein theoretisch berechneter Festkörpergehalt von 0,103 Gew.-% für TEOS. Analog kann eine entsprechende Berechnung für MTEOS und GLYMO erfolgen. Für MTEOS ergibt sich ein theoretisch berechneter Festkörpergehalt von 0,135 Gew.-% und für GLYMO von 0,281 Gew.-%. Dadurch ergibt sich ein gesamter theoretisch berechneter Festkörpergehalt von 0,518 Gew.-% für S1 (siehe Tabelle 1).

**2.** Herstellung von beschichteten elektrisch leitfähigen Substraten mittels des erfindungsgemäßen Verfahrens (Beispiele B1-B6) und mittels einen Vergleichsverfahrens (Vergleichsbeispiele V1 bis V3; ohne Schritt (2))

Es werden drei Arten von insgesamt neun Testblechen T1 (kaltgewalzter Stahl (CRS)), T2 (tauchverzinkter Stahl (HDG)) und T3 (Aluminium AA6014 (ALU)) als Beispiele elektrisch leitfähiger Substrate eingesetzt (jeweils dreimal T1, T2 und T3).

Diese werden jeweils durch Eintauchen der Bleche in ein Bad enthaltend eine wässrigen Lösung enthaltend die kommerziell erhältlichen Produkte Ridoline 1565-1 (3,0 Gew.-%) und Ridosol 1400-1 (0,3 % Gew.-%) der Firma Henkel sowie Wasser (96,7 Gew.-%) über eine Dauer von 1,5 Minuten bei einer Temperatur von 62°C gereinigt. Danach wird eine mechanische Reinigung (mittels Pinsel) über eine Dauer von 1,5 Minuten durchgeführt und die Bleche im Anschluss wiederum für eine Dauer von 1,5 Minuten erneut in das Bad eingetaucht.

Im direkten Anschluss an die Reinigung wird ein kathodischer Tauchlack (KTL) (amin-modifiziertes Epoxidharz-Bindemittel in Kombination mit einem blockierten Isocyanat-Vernetzer und einer Pigmentpaste der Firma BASF Coatings, welches unter dem Namen CathoGuard® 800 kommerziell erhältlich ist) auf jedes der gereinigten Testbleche T1, T2 und T3 appliziert (Schritt (1) des Verfahrens). Dabei weist das Tauchlackbad eine Badtemperatur von 28 °C auf. Die Rührgeschwindigkeit beträgt 600 Umdrehungen pro Minute.

Die auf diese Weise mit einem Tauchlack beschichteten Substrate werden mit deionisiertem Wasser gespült (Schritt (1a) des Verfahrens) und in einem Bad enthaltend deionisiertes Wasser über eine Dauer von 0 bis 20 Minuten zwischengelagert (optionaler Schritt (1b) des Verfahrens).

Danach werden insgesamt sechs der mit dem Tauchlack beschichteten Substrate T1, T2 und T3 (jeweils zwei Bleche T1, T2 und T3) in ein Bad der wässrigen Sol-Gel-Zusammensetzung S1 oder S2 für eine Dauer von 10 Sekunden eingetaucht (Schritt (2)). Die Austauchgeschwindigkeit, mit der die Substrate im Anschluss wieder aus dem Bad herausgezogen werden, beträgt dabei nach Ablauf der 10 Sekunden 400 mm/min. Für die verbleibenden drei der insgesamt neun Bleche wurde Schritt (2) nicht durchgeführt.

Im Anschluss an Schritt (2) wird mit deionisiertem Wasser über eine Dauer von 20 Sekunden gespült (Schritt (2a)). Dabei wird das nach Schritt (2) erhaltene Substrat über eine Dauer von 20 Sekunden in ein Bad aus deionisiertem Wasser eingetaucht.

Nach Trocknen über eine Dauer von 5 - 20 min bei 50 °C (Ofentemperatur) werden die erhaltenen Beschichtungen bei 175 °C (Ofentemperatur) über eine Dauer von 25 min eingebrannt (Schritt (3)).

Tabelle 2 gibt einen Überblick über die mittels des erfindungsgemäßen Verfahrens erhaltenen beschichteten Substrate.

Tabelle 2:

| | Beispiel B1 | Beispiel B2 | Beispiel B3 | Beispiel B4 | Beispiel B5 | Beispiel B6 |
|---|---|---|---|---|---|---|
| Substrat | T1 (CRS) | T2 (HDG) | T3 (ALU) | T1 (CRS) | T2 (HDG) | T3 (ALU) |
| in Schritt (2) eingesetzte Sol-Gel-Zusammensetzung | S1 | S1 | S1 | S2 | S2 | S2 |

(fortgesetzt)

|  | **Beispiel B1** | **Beispiel B2** | **Beispiel B3** | **Beispiel B4** | **Beispiel B5** | **Beispiel B6** |
|---|---|---|---|---|---|---|
| Substrat | T1 (CRS) | T2 (HDG) | T3 (ALU) | T1 (CRS) | T2 (HDG) | T3 (ALU) |
| Gesamtschichtdicke* [µm] | 15,5 | 15 | 14,5 | 15 | 14,5 | 14,5 |
| * Gesamttrockenschichtdicke der mittels des gesamten Verfahrens auf das Substrat aufgetragenen Beschichtung | | | | | | |

Insgesamt wurde das vorstehend beschriebene erfindungsgemäße Verfahren für sechs Ausführungsbeispiele (Beispiele B1 bis B6) durchgeführt. Dabei wurde das Verfahren ausgehend von jedem der Testbleche T1, T2 und T3 jeweils unter Einsatz jeder wässrigen Sol-Gel-Zusammensetzung S1 und S2 in Schritt (2) durchgeführt.

Zudem wurden Vergleichsverfahren ausgehend von jedem der Testbleche T1, T2 und T3 durchgeführt, in denen jedoch der Schritt (2) nicht durchgeführt wurde (Vergleichsbeispiele V1, V2 und V3).

Das Verfahren wird ausgehend von den drei Arten unterschiedlicher Testbleche T1, T2 und T3 so oft wiederholt, bis insgesamt 36 gemäß dem vorstehend beschriebenen Verfahren erhältliche beschichtete Testbleche erhalten werden (jeweils 3 Bleche V1, V3, B1, B3, B4 und B6 sowie jeweils 6 Bleche V2, B2 und B5).

**3.** Untersuchung der Korrosionsschutzwirkung und weiterer Eigenschaften der beschichteten Substrate der Beispiele B1- B6 und der Vergleichsbeispiele V1 bis V3

Alle nachstehenden Prüfungen wurden entsprechend der vorstehend angegebenen Bestimmungsmethode und der entsprechenden Norm durchgeführt. Jeder Wert in Tabelle 3 bzw. Tabelle 4 ist der Mittelwert (mit Standardabweichung) aus einer Dreifachbestimmung.

Wie aus den Tabellen 3 und 4 ersichtlich ist, zeichnen sich die mittels des erfindungsgemäßen Verfahrens hergestellten beschichteten Substrate der Beispiele 1 bis 6 im Vergleich zu den Vergleichsbeispielen V1 bis V3 insbesondere dadurch aus, dass die Unterwanderung in [mm] nach Durchführung des Klimawechseltests (Beispiele B2 und B5 vs. Vergleichsbeispiel V2) bzw. nach Durchführung der kupferbeschleunigten Essigsäure-Salzsprühnebelprüfung gemäß DIN EN ISO 9227 CASS (Beispiele B3 und B6 vs. Vergleichsbeispiel V3) bis zu 50% geringer ausfällt. Zudem zeigen die Beispiele B3 und B6 im Vergleich zu Vergleichsbeispiel V3 nach Durchführung der kupferbeschleunigten Essigsäure-Salzsprühnebelprüfung gemäß DIN EN ISO 9227 CASS einen wesentlich geringeren Flächenrost.

Tabelle 3:

|  | **Beispiel B1** | **Beispiel B2** | **Beispiel B3** | **Beispiel B4** | **Beispiel B5** | **Beispiel B6** |
|---|---|---|---|---|---|---|
| Substrat | T1 (CRS) | T2 (HDG) | T3 (ALU) | T1 (CRS) | T2 (HDG) | T3 (ALU) |
| Gitterschnittprüfung nach DIN EN ISO 2409 für CRS | 1,0±0* 1,0±0[#] | - | - | 1,0±0* 1,0±0[#] | - | - |
| Gitterschnittprüfung nach DIN EN ISO 2409 für HDG | - | 1,0±0* 1,0±0[#] | - | - | 1,0±0* 1,0±0[#] | - |
| Klimawechseltest, 30 Zyklen für HDG | - | 4,6±0,3[+] 5,0±0[~] | - | - | 4,1±0,4[+] 5,0±0[~] | - |
| Kupferbeschleunigte Essigsäure-Salzsprühnebelprüfung (DIN EN ISO 9227 CASS), 240 h | - | - | 1,9±0,5[+] 1,0±0[a] | - | - | 1,4±0,3[+] 1,0±0[a] |
| * = vor Konstantklima (CH, 240 h, DIN EN ISO 6270) | | | | | | |
| [#] = nach Konstantklima (CH, 240 h, DIN EN ISO 6270) | | | | | | |
| [+] = Unterwanderung [mm] gemäß DIN EN ISO 4628-8 | | | | | | |
| [~] = Steinschlag gemäß DIN EN ISO 20567-1 | | | | | | |
| [a] = Flächenrost gemäß DIN EN ISO 4628-3 | | | | | | |

Tabelle 4:

| | Vergleichsbeispiel V1 | Vergleichsbeispiel V2 | Vergleichsbeispiel V3 |
|---|---|---|---|
| Substrat | T1 (CRS) | T2 (HDG) | T3 (ALU) |
| Gitterschnittprüfung nach DIN EN ISO 2409 für CRS | $1,5\pm0,7$* $1,0\pm0$# | - | - |
| Gitterschnittprüfung nach DIN EN ISO 2409 für HDG | - | $1,0\pm0$* $1,0\pm0$# | - |
| Klimawechseltest, 30 Zyklen für HDG | - | $5,9\pm0,5$+ $5,0\pm0$~ | - |
| Kupferbeschleunigte Essigsäure-Salzsprühnebelprüfung (CASS, DIN EN ISO 9227), 240 h | - | - | $3,7\pm0,2$+ $2,7\pm1,2$a |

\* = vor Konstantklima (CH, 240 h, DIN EN ISO 6270)
# = nach Konstantklima (CH, 240 h, DIN EN ISO 6270)
+ = Unterwanderung [mm] gemäß DIN EN ISO 4628-8
~ = Steinschlag gemäß DIN EN ISO 20567-1
a = Flächenrost gemäß DIN EN ISO 4628-3

**Patentansprüche**

**1.** Ein Verfahren zur zumindest teilweisen Beschichtung eines elektrisch leitfähigen Substrats umfassend wenigstens die Schritte

(1) zumindest teilweise Beschichtung des Substrats mit einem wenigstens ein Bindemittel umfassenden Tauchlack durch eine zumindest teilweise elektrophoretische Abscheidung des Tauchlacks auf der Substratoberfläche, und
(2) Kontaktieren des mit dem Tauchlack zumindest teilweise beschichteten Substrats mit einer wässrigen Zusammensetzung,

**dadurch gekennzeichnet, dass** die in Schritt (2) eingesetzte wässrige Zusammensetzung eine wässrige Sol-Gel-Zusammensetzung ist, welche erhältlich ist durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser,
und der Schritt (2) vor einer Aushärtung des elektrophoretisch abgeschiedenen Tauchlacks erfolgt.

**2.** Das Verfahren nach Anspruch 1, **dadurch gekennzeichnet, dass** die in Schritt (2) eingesetzte wässrige Sol-Gel-Zusammensetzung erhältlich ist durch Umsetzung wenigstens einer Verbindung

(A1) $(M^1)^x(X^1)_a(R^1)$,

und/oder

(A2) $(M^2)^y(X^2)_b(R^2)(R^3)$

mit Wasser, worin

$M^1$ und $M^2$ jeweils unabhängig voneinander für ein Metallatom oder ein Halbmetallatom stehen,
$X^1$ und $X^2$ jeweils unabhängig voneinander für eine hydrolysierbare Gruppe stehen,
$x$ für die Wertigkeit des Metallatoms oder Halbmetallatoms $M^1$ steht,
$y$ für die Wertigkeit des Metallatoms oder Halbmetallatoms $M^2$ steht,
$R^1$ für $X^1$, einen nicht hydrolysierbaren organischen Rest, für $(T)(M^1)^x(X^1)_c$ oder für $(U)[(M^1)^x(X^1)_c]_2$, steht,

$R^2$ für einen nicht hydrolysierbaren organischen Rest steht,

$R^3$ für einen nicht hydrolysierbaren organischen Rest, für $(T)(M^1)^x(X^1)_c$, für $(U)[(M^1)^x(X^1)_c]_2$, für $(V)(M^2)^y(X^2)_d(R^2)$ oder für $(W)[(M^2)^y(X^2)_d(R^2)]^2$ steht,

a für x steht, wenn $R^1$ für $X^1$ steht oder

a für x-1 steht, wenn $R^1$ für einen nicht hydrolysierbaren organischen Rest, für $(T)(M^1)^x(X^1)_c$ oder für $(U)[(M^1)^x(X^1)_c]_2$ steht, jeweils unter der Voraussetzung, dass a mindestens für 2 steht,

b für y-2 steht, unter der Voraussetzung, dass b mindestens für 2 steht,

T, U, V und W jeweils unabhängig voneinander für einen Rest steht, der 1 bis 30 Kohlenstoffatome aufweist,

c für x-1 steht, und

d für y-2 steht,

3. Das Verfahren nach Anspruch 2, **dadurch gekennzeichnet, dass**

$X^1$ und $X^2$ jeweils unabhängig voneinander ausgewählt sind aus der Gruppe bestehend aus Halogeniden und Alkoxy-Gruppen O-$R^a$, worin $R^a$ jeweils für einen $C_{1-16}$-aliphatischen Rest steht, und

$M^1$ und $M^2$ jeweils unabhängig voneinander ausgewählt sind aus der Gruppe bestehend aus Al, Ti, Zr, Fe, B und Si.

4. Das Verfahren nach Anspruch 2 oder 3, **dadurch gekennzeichnet, dass** der wenigstens eine nicht hydrolysierbare organische Rest innerhalb der Bedeutungen von $R^1$, $R^2$ und $R^3$ - jeweils unabhängig voneinander - für einen Rest ausgewählt aus der Gruppe bestehend aus $C_1$-$C_{10}$-aliphatischen Resten, $C_1$-$C_{10}$-heteroaliphatischen Resten, $C_3$-$C_{10}$-cycloaliphatischen Resten, 3-10-gliedrigen heterocycloaliphatischen Resten, 5-12 gliedrigen Aryl- oder Heteroaryl-Resten, über einen $C_{1-6}$-aliphatischen Rest gebundenen $C_3$-$C_{10}$-cycloaliphatischen Restes, über einen $C_{1-6}$-aliphatischen Rest gebundenen 3-10- gliedrigen heterocycloaliphatischen Resten, über einen $C_{1-6}$-aliphatischen Rest gebundenen 5-12 gliedrigen Aryl- oder Heteroaryl-Resten steht.

5. Das Verfahren nach Anspruch 3 oder 4, **dadurch gekennzeichnet, dass**

wenigstens eine Verbindung (A1) als wenigstens eine Ausgangsverbindung eingesetzt wird, in der $R^1$ für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, Thiol-Gruppen, Isocyanat-Gruppen, phosphorhaltigen Gruppen, und Gruppen, die eine ethylenisch ungesättige Doppelbindung aufweisen, aufweist.

6. Das Verfahren nach einem der vorstehenden Ansprüche, **dadurch gekennzeichnet, dass** die in Schritt (2) eingesetzte wässrige Sol-Gel-Zusammensetzung erhältlich ist durch Umsetzung

wenigstens einer Verbindung $Si(X^1)_3(R^1)$ als wenigstens eine Verbindung (A1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

mit Wasser.

7. Das Verfahren nach Anspruch 6, **dadurch gekennzeichnet, dass** die in Schritt (2) eingesetzte wässrige Sol-Gel-Zusammensetzung erhältlich ist durch Umsetzung wenigstens einer Verbindung $Si(X^1)_3(R^1)$ als wenigstens eine Verbindung (A1) wie in Anspruch 6 definiert,

und wenigstens einer Verbindung $Si(X^1)_4$ als wenigstens eine weitere Verbindung (A1),

und wenigstens einer Verbindung $Si(X^1)_3(R^1)$ als wenigstens eine weitere Verbindung (A1),

wobei $R^1$ darin für einen nicht hydrolysierbaren organischen Rest steht, welcher keine reaktive funktionelle Gruppe aufweist.

mit Wasser.

8. Das Verfahren nach einem der vorstehenden Ansprüche, **dadurch gekennzeichnet, dass** die in Schritt (2) eingesetzte wässrige Sol-Gel-Zusammensetzung erhältlich ist durch Umsetzung

wenigstens einer Verbindung $Si(X^1)_3(R^1)$ als wenigstens eine Verbindung (A1),

wobei $R^1$ darin für einen nicht hydrolysierbaren $C_1$-$C_{10}$-aliphatischen organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

und wenigstens einer Verbindung $Si(X^1)_4$ als wenigstens eine weitere Verbindung (A1),

und wenigstens einer Verbindung $Si(X^1)_3(R^1)$ als wenigstens eine weitere Verbindung (A1),

wobei $R^1$ darin für einen nicht hydrolysierbaren organischen $C_1$-$C_{10}$-aliphatischen Rest steht, welcher keine reaktive funktionelle Gruppe aufweist.
mit Wasser.

9. Das Verfahren nach einem der vorstehenden Ansprüche, **dadurch gekennzeichnet, dass** der Festkörpergehalt der in Schritt (2) eingesetzten wässrigen Zusammensetzung nach vollständiger Hydrolyse und Kondensation der zur Herstellung der wässrigen Zusammensetzung eingesetzten wenigstens einen Ausgangsverbindung in einem Bereich von 0,01 bis 10 Gew.-%, bezogen auf das Gesamtgewicht der wässrigen Zusammensetzung, liegt.

10. Das Verfahren nach einem der vorstehenden Ansprüche, **dadurch gekennzeichnet, dass** die in Schritt (2) eingesetzte wässrige Zusammensetzung einen pH-Wert im Bereich von 3,0 bis 6,0 aufweist.

11. Das Verfahren nach einem der vorstehenden Ansprüche, **dadurch gekennzeichnet, dass** das Verfahren keinen vor Schritt (1) durchzuführenden Phosphatierungsschritt umfasst.

12. Das Verfahren nach einem der vorstehenden Ansprüche, **dadurch gekennzeichnet, dass** es ferner einen Schritt (3) umfasst, nämlich eine

(3) Aushärtung der nach Schritt (1) erhaltenen und einer Kontaktierung gemäß Schritt (2) unterworfenen zumindest teilweisen Beschichtung auf dem Substrat.

13. Ein zumindest teilweise beschichtetes Substrat erhältlich nach dem Verfahren gemäß einem der Ansprüche 1 bis 12.

14. Ein aus wenigstens einem zumindest teilweise beschichteten Substrat gemäß Anspruch 13 hergestelltes Bauteil.

15. Eine Verwendung einer wässrigen Sol-Gel-Zusammensetzung zur Nachbehandlung einer durch eine zumindest teilweise elektrophoretische Abscheidung zumindest teilweise auf ein elektrisch leitfähiges Substrat aufgebrachten Tauchlackschicht durch Kontaktierung der Tauchlackschicht mit der wässrigen Sol-Gel-Zusammensetzung, wobei die wässrige Sol-Gel-Zusammensetzung erhältlich ist durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser.

**Claims**

1. Method for at least partly coating an electrically conductive substrate, comprising at least the steps of

(1) at least partly coating the substrate with a dipping varnish comprising at least one binder, by at least partial electrophoretic deposition of the dipping varnish on the substrate surface, and
(2) contacting the substrate at least partly coated with the dipping varnish with an aqueous composition,

**characterized in that** the aqueous composition used in step (2) is an aqueous sol-gel composition, which is obtainable by reacting at least one starting compound which has at least one metal atom and/or semimetal atom and at least two hydrolyzable groups, and which further has at least one nonhydrolyzable organic radical, with water, and step (2) takes place before curing of the electrophoretically deposited dipping varnish.

2. Method according to Claim 1, **characterized in that** the aqueous sol-gel composition used in step (2) is obtainable by reacting at least one compound

$$(A1) \qquad (M^1)^x(X^1)_a(R^1),$$

and/or

$$(A2) \qquad (M^2)^y(X^2)^b(R^2)(R^3)$$

with water, in which

$M^1$ and $M^2$ each independently of one another are a metal atom or a semimetal atom,
$X^1$ and $X^2$ each independently of one another are a hydrolyzable group,

x is the valence of the metal atom or semimetal atom $M^1$,

y is the valence of the metal atom or semimetal atom $M^2$,

$R^1$ is $X^1$, a nonhydrolyzable organic radical, (T) $(M^1)^x(X^1)_c$, or (U) $[(M^1)^x(X^1)_c]_2$,

$R^2$ is a nonhydrolyzable organic radical,

$R^3$ is a nonhydrolyzable organic radical, (T) $(M^1)^x(X^1)_c$, (U) $[(M^1)^x(X^1)_c]_2$, (V) $(M^2)^y(X^2)_d(R^2)$ or (W) $[(M^2)^y(X^2)_d(R^2)]_2$,

a is x if $R^1$ is $X^1$ or

a is x-1 if $R^1$ is a nonhydrolyzable organic radical, (T) $(M^1)^x(X^1)_c$, or (U) $[(M^1)^x(X^1)_c]_2$, in each case with the proviso that a is at least 2,

b is y-2, with the proviso that b is at least 2,

T, U, V and W in each case independently of one another are each a radical which has 1 to 30 carbon atoms,

c is x-1, and

d is y-2.

3. Method according to Claim 2, **characterized in that**

$X^1$ and $X^2$ are selected each independently of one another from the group consisting of halides and alkoxy groups O-$R^a$, in which $R^a$ in each case is a $C_{1-16}$ aliphatic radical, and

$M^1$ and $M^2$ are selected each independently of one another from the group consisting of Al, Ti, Zr, Fe, B, and Si.

4. Method according to Claim 2 or 3, **characterized in that** the at least one nonhydrolyzable organic radical within the definitions of $R^1$, $R^2$, and $R^3$ - in each case independently of one another - is a radical selected from the group consisting of $C_1$-$C_{10}$ aliphatic radicals, $C_1$-$C_{10}$ heteroaliphatic radicals, $C_3$-$C_{10}$ cycloaliphatic radicals, 3-10-membered heterocycloaliphatic radicals, 5-12-membered aryl or heteroaryl radicals, $C_3$-$C_{10}$ cycloaliphatic radical bonded via a $C_1$-$C_6$ aliphatic radical, 3-10-membered heterocycloaliphatic radical bonded via a $C_1$-$C_6$ aliphatic radical, 5-12-membered aryl or heteroaryl radicals bonded via a $C_1$-$C_6$ aliphatic radical.

5. Method according to Claim 3 or 4, **characterized in that**

at least one compound (A1) is used as at least one starting compound in which $R^1$ is a nonhydrolyzable organic radical which has at least one reactive functional group selected from the group consisting of primary amino groups, secondary amino groups, epoxide groups, thiol groups, isocyanate groups, phosphorus-containing groups, and groups which have an ethylenically unsaturated double bond.

6. Method according to any of the preceding claims, **characterized in that** the aqueous sol-gel composition used in step (2) is obtainable by reacting

at least one compound $Si(X^1)_3(R^1)$ as at least one compound (A1),

where $R^1$ therein is a nonhydrolyzable organic radical which has at least one reactive functional group selected from the group consisting of primary amino groups, secondary amino groups, epoxide groups, and groups which have an ethylenically unsaturated double bond, with water.

7. Method according to Claim 6, **characterized in that** the aqueous sol-gel composition used in step (2) is obtainable by reacting at least one compound $Si(X^1)_3(R^1)$ as at least one compound (A1) as defined in Claim 6,

and at least one compound $Si(X^1)_4$ is used as at least one further compound (A1),

and at least one compound $Si(X^1)_3(R^1)$ is used as at least one further compound (A1),

where $R^1$ therein is a nonhydrolyzable organic radical which has no reactive functional group, with water.

8. Method according to one of the preceding claims, **characterized in that** the aqueous sol-gel composition used in step (2) is obtainable by reacting at least one compound $Si(X^1)_3(R^1)$ as at least one compound (A1),

where $R^1$ therein is a nonhydrolyzable $C_1$-$C_{10}$ aliphatic organic radical which has at least one reactive functional group selected from the group consisting of primary amino groups, secondary amino groups, epoxide groups, and groups which have an ethylenically unsaturated double bond,

and at least one compound $Si(X^1)_4$ is used as at least one further compound (A1),

and at least one compound $Si(X^1)_3(R^1)$ is used as at least one further compound (A1),

where $R^1$ therein is a nonhydrolyzable organic $C_1$-$C_{10}$ aliphatic radical which has no reactive functional group, with water.

9. Method according to any of the preceding claims, **characterized in that** the solids content of the aqueous composition used in step (2), after complete hydrolysis and condensation of the at least one starting compound used for preparing the aqueous composition, is in a range from 0.01 to 10 wt%, based on the total weight of the aqueous composition.

**10.** Method according to any of the preceding claims, **characterized in that** the aqueous composition used in step (2) has a pH in the range from 3.0 to 6.0.

**11.** Method according to any of the preceding claims, **characterized in that** the method comprises no phosphating step to be carried out before step (1).

**12.** Method according to any of the preceding claims, **characterized in that** it further comprises a step (3) of

(3) curing the at least partial coating on the substrate that has been obtained according to step (1) and subjected to contacting in accordance with step (2).

**13.** At least partly coated substrate obtainable by the method according to any of Claims 1 to 12.

**14.** Component produced from at least one at least partly coated substrate according to Claim 13.

**15.** Use of an aqueous sol-gel composition for after-treating a dipping varnish layer applied at least partly to an electrically conductive substrate by an at least partly electrophoretic deposition, by contacting of the dipping varnish layer with the aqueous sol-gel composition,
wherein the aqueous sol-gel composition is obtainable by reacting at least one starting compound which has at least one metal atom and/or semimetal atom and at least two hydrolyzable groups, and which further has at least one nonhydrolyzable organic radical, with water.

**Revendications**

**1.** Procédé de revêtement au moins partiel d'un substrat électriquement conducteur comprenant au moins les étapes suivantes :

(1) le revêtement au moins partiel du substrat avec un vernis par immersion comprenant au moins un liant par un dépôt électrophorétique au moins partiel du vernis par immersion sur la surface du substrat, et
(2) la mise en contact du substrat au moins partiellement revêtu avec le vernis par immersion avec une composition aqueuse,

**caractérisé en ce que** la composition aqueuse utilisée à l'étape (2) est une composition sol-gel aqueuse, qui peut être obtenue par mise en réaction d'au moins un composé de départ, qui comprend au moins un atome métallique et/ou un atome semi-métallique et au moins deux groupes hydrolysables, et qui comprend en outre au moins un radical organique non hydrolysable, avec de l'eau,
et l'étape (2) a lieu avant un durcissement du vernis par immersion déposé électrophorétiquement.

**2.** Procédé selon la revendication 1, **caractérisé en ce que** la composition sol-gel aqueuse utilisée à l'étape (2) peut être obtenue par mise en réaction d'au moins un composé

$$(A1) \qquad (M^1)^x(X^1)_a(R^1)$$

et/ou

$$(A2) \qquad (M^2)^y(X^2)_b(R^2)(R^3)$$

avec de l'eau,

$M^1$ et $M^2$ représentant chacun indépendamment l'un de l'autre un atome métallique ou un atome semi-métallique,
$X^1$ et $X^2$ représentant chacun indépendamment l'un de l'autre un groupe hydrolysable,
x représentant la valence de l'atome métallique ou de l'atome semi-métallique $M^1$,
y représentant la valence de l'atome métallique ou de l'atome semi-métallique $M^2$,
$R^1$ représentant $X^1$, un radical organique non hydrolysable, $(T)(M^1)^x(X^1)_c$ ou $(U)[(M^1)^x(X^1)_c]_2$,
$R^2$ représentant un radical organique non hydrolysable,
$R^3$ représentant un radical organique non hydrolysable, $(T)(M^1)^x(X^1)_c$, $(U)[(M^1)^x(X^1)_c]_2$, $(V)(M^2)^y(X^2)_d(R^2)$ ou $(W)[(M^2)^y(X^2)^d(R^2)]_2$,

a représentant x lorsque $R^1$ représente $X^1$ ou

a représente x-1 lorsque $R^1$ représente un radical organique non hydrolysable, $(T)(M^1)^x(X^1)_c$ ou $(U)[(M^1)^x(X^1)_c]_2$,

à condition qu'a représente à chaque fois au moins 2,

b représentant y-2, à condition que b représente au moins 2,

T, U, V et W représentant chacun indépendamment les uns des autres un radical qui comprend 1 à 30 atomes de carbone,

c représentant x-1, et

d représentant y-2.

3. Procédé selon la revendication 2, **caractérisé en ce que**

$X^1$ et $X^2$ sont chacun choisis indépendamment l'un de l'autre dans le groupe constitué par les halogénures et les groupes alcoxy $O-R^a$, $R^a$ représentant à chaque fois un radical aliphatique en $C_{1-16}$, et

$M^1$ et $M^2$ sont chacun choisis indépendamment l'un de l'autre dans le groupe constitué par Al, Ti, Zr, Fe, B et Si.

4. Procédé selon la revendication 2 ou 3, **caractérisé en ce que** ledit au moins un radical organique non hydrolysable représente dans le cadre des significations de $R^1$, $R^2$ et $R^3$, à chaque fois indépendamment les uns des autres, un radical choisi dans le groupe constitué par les radicaux aliphatiques en $C_1$-$C_{10}$, les radicaux hétéroaliphatiques en $C_1$-$C_{10}$, les radicaux cycloaliphatiques en $C_3$-$C_{10}$, les radicaux hétérocycloaliphatiques de 3 à 10 chaînons, les radicaux aryle ou hétéroaryle de 5 à 12 chaînons, le radical cycloaliphatique en $C_3$-$C_{10}$ reliés par un radical aliphatique en $C_{1-6}$, les radicaux hétérocycloaliphatiques de 3 à 10 chaînons reliés par un radical aliphatique en $C_{1-6}$, les radicaux aryle ou hétéroaryle de 5 à 12 chaînons reliés par un radical aliphatique en $C_{1-6}$.

5. Procédé selon la revendication 3 ou 4, **caractérisé en ce qu'**au moins un composé (A1) est utilisé en tant qu'au moins un composé de départ, dans lequel $R^1$ représente un radical organique non hydrolysable, qui comprend au moins un groupe fonctionnel réactif choisi dans le groupe constitué par les groupes amino primaires, les groupes amino secondaires, les groupes époxyde, les groupes thiol, les groupes isocyanate, les groupes contenant du phosphore et les groupes qui comprennent une double liaison éthyléniquement insaturée.

6. Procédé selon l'une quelconque des revendications précédentes, **caractérisé en ce que** la composition sol-gel aqueuse utilisée à l'étape (2) peut être obtenue par mise en réaction

d'au moins un composé $Si(X^1)_3(R^1)$ en tant qu'au moins un composé (A1),

$R^1$ y représentant un radical organique non hydrolysable, qui comprend au moins un groupe fonctionnel réactif choisi dans le groupe constitué par les groupes amino primaires, les groupes amino secondaires, les groupes époxyde et les groupes qui comprennent une double liaison éthyléniquement insaturée,

avec de l'eau.

7. Procédé selon la revendication 6, **caractérisé en ce que** la composition sol-gel aqueuse utilisée à l'étape (2) peut être obtenue par mise en réaction d'au moins un composé $Si(X^1)_3(R^1)$ en tant qu'au moins un composé (A1) tel que défini dans la revendication 6,

et d'au moins un composé $Si(X^1)_4$ en tant qu'au moins un autre composé (A1),

et d'au moins un composé $Si(X^1)_3(R^1)$ en tant qu'au moins un autre composé (A1),

$R^1$ y représentant un radical organique non hydrolysable qui ne comprend pas de groupe fonctionnel réactif,

avec de l'eau.

8. Procédé selon l'une quelconque des revendications précédentes, **caractérisé en ce que** la composition sol-gel aqueuse utilisée à l'étape (2) peut être obtenue par mise en réaction

d'au moins un composé $Si(X^1)_3(R^1)$ en tant qu'au moins un composé (A1),

$R^1$ y représentant un radical organique aliphatique en $C_{1-10}$ non hydrolysable, qui comprend au moins un groupe fonctionnel réactif choisi dans le groupe constitué par les groupes amino primaires, les groupes amino secondaires, les groupes époxyde et les groupes qui comprennent une double liaison éthyléniquement insaturée,

et d'au moins un composé $Si(X^1)_4$ en tant qu'au moins un autre composé (A1),

et d'au moins un composé $Si(X^1)_3(R^1)$ en tant qu'au moins un autre composé (A1),

$R^1$ y représentant un radical organique aliphatique en $C_1$-$C_{10}$ non hydrolysable qui ne comprend pas de groupe fonctionnel réactif,

avec de l'eau.

9. Procédé selon l'une quelconque des revendications précédentes, **caractérisé en ce que** la teneur en solides de la composition aqueuse utilisée à l'étape (2) après hydrolyse totale et condensation dudit au moins un composé de départ utilisé pour la fabrication de la composition aqueuse se situe dans une plage allant de 0,01 à 10 % en poids, par rapport au poids total de la composition aqueuse.

10. Procédé selon l'une quelconque des revendications précédentes, **caractérisé en ce que** la composition aqueuse utilisée à l'étape (2) présente un pH dans la plage allant de 3,0 à 6,0.

11. Procédé selon l'une quelconque des revendications précédentes, **caractérisé en ce que** le procédé ne comprend pas d'étape de phosphatation à réaliser avant l'étape (1).

12. Procédé selon l'une quelconque des revendications précédentes, **caractérisé en ce qu'**il comprend en outre une étape (3), à savoir

    (3) un durcissement du revêtement au moins partiel sur le substrat obtenu selon l'étape (1) et soumis à une mise en contact selon l'étape (2).

13. Substrat au moins partiellement revêtu pouvant être obtenu par le procédé selon l'une quelconque des revendications 1 à 12.

14. Composant fabriqué à partir d'au moins un substrat au moins partiellement revêtu selon la revendication 13.

15. Utilisation d'une composition sol-gel aqueuse pour le traitement ultérieur d'une couche de vernis par immersion appliquée au moins partiellement sur un substrat électriquement conducteur par un dépôt électrophorétique au moins partiel par mise en contact de la couche de vernis par immersion avec la composition sol-gel aqueuse, la composition sol-gel aqueuse pouvant être obtenue par mise en réaction d'au moins un composé de départ, qui comprend au moins un atome métallique et/ou un atome semi-métallique et au moins deux groupes hydrolysable, et qui comprend en outre au moins un radical organique non hydrolysable, avec de l'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101538711 B
- CN 101787553 A
- WO 2006019803 A2
- EP 1510558 A1
- WO 03090938 A1
- WO 2009115504 A1
- DE 3518732
- DE 3518770
- EP 0004090 A
- EP 0012463 A
- EP 0961797 B1
- EP 0505445 B1

**In der Beschreibung aufgeführte Nicht-Patentliteratur**

- Römpp Lexikon Lacke und Druckfarben. Georg Thieme Verlag, 1998, 250 ff
- Römpp Lexikon, Lacke und Druckfarben. Georg Thieme Verlag, 1998
- **D. WANG et al.** *Progress in Organic Coatings,* 2009, vol. 64, 327-338
- **S. ZHENG et al.** *J. Sol-Gel. Sci. Technol.,* 2010, vol. 54, 174-187